(19) Europäisches Patentamt
European Patent Office
Office européen des brevets

(11) EP 2 615 131 B1

(12) # EUROPEAN PATENT SPECIFICATION

(45) Date of publication and mention of the grant of the patent:
**27.04.2016 Bulletin 2016/17**

(51) Int Cl.:
***C08K 3/04*** *(2006.01)* ***C08L 21/00*** *(2006.01)*
***B60C 19/08*** *(2006.01)*

(21) Application number: **13150898.8**

(22) Date of filing: **11.01.2013**

(54) **RUBBER COMPOSITION FOR TIRE, AND PNEUMATIC TIRE**

KAUTSCHUKZUSAMMENSETZUNG FÜR REIFEN UND LUFTREIFEN

COMPOSITION DE CAOUTCHOUC POUR PNEU ET BANDAGE PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2012 JP 2012004270**
**12.01.2012 JP 2012004271**
**14.11.2012 JP 2012250404**
**14.11.2012 JP 2012250405**

(43) Date of publication of application:
**17.07.2013 Bulletin 2013/29**

(73) Proprietor: **Sumitomo Rubber Industries, Ltd.**
**Kobe-shi,**
**Hyogo-ken 651-0072 (JP)**

(72) Inventors:
- **Hattori, Takayuki**
  **Kobe-shi,, Hyogo 651-0072 (JP)**
- **Wada, Takao**
  **Kobe-shi,, Hyogo 651-0072 (JP)**
- **Yokoyama, Yuka**
  **Kobe-shi,, Hyogo 651-0072 (JP)**

(74) Representative: **Manitz, Finsterwald & Partner GbR**
**Martin-Greif-Strasse 1**
**80336 München (DE)**

(56) References cited:
**EP-A1- 0 870 796** **EP-A1- 1 790 688**
**EP-A1- 2 014 488**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 615 131 B1

Printed by Jouve, 75001 PARIS (FR)

## Description

### TECHNICAL FIELD

The present invention relates to a rubber composition for a tire, and a pneumatic tire using the composition.

### BACKGROUND ART

In recent years, for the purpose of reducing the rolling resistance of tires while maintaining wet grip performance, compositions containing silica as a main component have been used particularly in the tread portion of the tire. In this context, in order to further reduce the rolling resistance, using compositions that contain silica as a main reinforcing filler, instead of conventional compositions that contain carbon black as a main reinforcing filler, in other components such as the breaker, sidewall, clinch, and chafer portions has also been being considered.

However, if silica is used instead of carbon black in the tire components, this leads to a defect that static electricity easily accumulates in the vehicle since silica has a high degree of electrical insulation and tends to increase electrical resistance of the tire. Moreover, the accumulation of static electricity raises possibilities that, for example, radio noise and the like might be easily caused, or fuel might ignite since a spark may be caused by the static electricity when the vehicle is supplied with fuel.

Patent Literature 1 discloses a tire including a tread, sidewall, breaker, or ply portion that has a volume specific resistance of $1\times10^9$ Ω-cm or more, and includes a reinforcing filler containing 70% by mass or more of silica, wherein the tire further includes a conductive rubber layer together with the tire components. However, regarding the method of kneading a rubber composition used as the conductive layer, the literature only teaches a mere X-F kneading process including a base kneading step and a final kneading step, and does not examine in detail the dispersibility of carbon black, the changes over time of the electrical resistance of the tire, and durability. In addition, since only styrene butadiene rubber is used as the rubber component of the rubber composition used as the conductive layer, there are some problems that the flex crack growth resistance becomes poor and therefore sufficient durability is not obtained. Furthermore, the literature does not include a disclosure about a clinch or chafer.

Patent Literature 2 discloses a pneumatic tire including an inner conductive layer, a conductive rubber, a coating rubber, a conducting rubber, and a bead portion rubber all of which have a volume specific resistance of less than $1\times10^8$ Ω·cm. However, the literature does not examine in detail the dispersibility of carbon black, the changes over time of the electrical resistance of the tire, and durability.

EP 0 870 796 A1 (D1) discloses a rubber composition including two diene rubbers, such as natural rubber and styrene butadiene rubber, and 5 to 30 parts of a carbon black BET specific surface area of for example 1.000 $m^2$/g.

EP 2 014 488 A1 (D2) relates to a pneumatic tyre comprising conductive rubber embedded in the tread having a volume specific resistivity of less than $1\times10^8$ Ω cm.

EP 1 709 688 A1 (D3)describes a rubber composition including for example natural rubber, styrene-butadiene rubber, silica and a silane coupling agent.

### CITATION LIST

### PATENT LITERATURE

Patent Literature 1: JP-A 2007-8269
Patent Literature 2: JP-A 2011-88458

### SUMMARY OF INVENTION

### TECHNICAL PROBLEM

An object of the present invention is to solve the above problems and provide a rubber composition for an inner sidewall layer and/or a breaker cushion which makes it possible to keep rolling resistance low, prevent the accumulation of static electricity during the running of the tire, suppress an increase over time in electrical resistance of the tire, and improve durability, and a pneumatic tire using the rubber composition. Another object of the present invention is to solve the above problems and provide a rubber composition for a clinch and/or a chafer which makes it possible to keep rolling resistance low, prevent the accumulation of static electricity during the running of the tire, suppress an increase over time in electrical resistance of the tire, and improve durability, and a pneumatic tire using the rubber composition.

SOLUTION TO PROBLEM

A first aspect of the present invention relates to a rubber composition for at least one of an inner sidewall layer and a breaker cushion, including: a rubber component including two or more diene rubbers; and carbon black having a nitrogen adsorption specific surface area of 400 $m^2/g$ or more in an amount of 5 to 30 parts by mass per 100 parts by mass of the rubber component, wherein the rubber composition has a degree of carbon black dispersion determined by counting agglomerates based on JIS K 6812 "Method for the assessment of the degree of pigment or carbon black dispersion in polyolefin pipes, fittings and compounds" of 90% or more.

The rubber composition is preferably obtained by a preparation method including: a base kneading step 1 of kneading at least one rubber including a diene rubber having the lowest solubility parameter among the two or more diene rubbers with the carbon black; and a base kneading step 2 of kneading a kneaded mixture obtained by the base kneading step 1 with at least one rubber including a diene rubber having the highest solubility parameter among the two or more diene rubbers.

The rubber composition is preferably obtained by the preparation method further including a rekneading step of rekneading a kneaded mixture obtained by the base kneading step 2.

The present invention also relates to a pneumatic tire, including at least one of an inner sidewall rubber layer and a breaker cushion rubber which are formed from the rubber composition.

Preferably, the pneumatic tire includes: a tread portion; a sidewall portion; a bead portion; a carcass extending from the tread portion via the sidewall portion to the bead portion; and a breaker portion located outwardly from the carcass in a radial direction of the tire, wherein the tread portion, the breaker portion, and the sidewall portion include a tread rubber, a breaker rubber, and a sidewall rubber, respectively, all of which have a volume specific resistance of $1\times10^8$ Ω·cm or more, wherein the pneumatic tire includes: an inner sidewall rubber layer that is placed between the carcass and the sidewall rubber; a breaker cushion rubber that is placed in contact with the inner sidewall rubber layer and placed below both ends of a breaker; a coating rubber that is placed so as to cover an upper side of the breaker portion while having a contact area with the breaker cushion rubber; a conducting rubber that is embedded in the tread portion so as to be in contact with the coating rubber and partially exposed on the tread surface; and a bead portion rubber that is placed in contact with the inner sidewall rubber layer and placed in an area of the bead portion which comes into contact with a rim flange, and wherein all of the inner sidewall rubber layer, the breaker cushion rubber, the coating rubber, the conducting rubber, and the bead portion rubber have a volume specific resistance of less than $1\times10^8$ Ω·cm.

In the pneumatic tire, the inner sidewall rubber layer preferably has a thickness of 0.2 to 1.0 mm.

The bead portion rubber is preferably a clinch rubber or a chafer rubber.

The conducting rubber is preferably formed continuously in a circumferential direction of the tire.

A second aspect of the present invention relates to a rubber composition for at least one of a clinch and a chafer, including: a rubber component including two or more diene rubbers; and carbon black having a nitrogen adsorption specific surface area of 400 $m^2/g$ or more in an amount of 5 to 30 parts by mass per 100 parts by mass of the rubber component, wherein the rubber composition has a degree of carbon black dispersion determined by counting agglomerates based on JIS K 6812 "Method for the assessment of the degree of pigment or carbon black dispersion in polyolefin pipes, fittings and compounds" of 90% or more.

The rubber composition is preferably obtained by a preparation method including: a base kneading step 1 of kneading at least one rubber including a diene rubber having the lowest solubility parameter among the two or more diene rubbers with the carbon black; and a base kneading step 2 of kneading a kneaded mixture obtained by the base kneading step 1 with at least one rubber including a diene rubber having the highest solubility parameter among the two or more diene rubbers.

The rubber composition is preferably obtained by the preparation method further including a rekneading step of rekneading a kneaded mixture obtained by the base kneading step 2.

The present invention also relates to a pneumatic tire, including at least one of a clinch rubber and a chafer rubber which are formed from the rubber composition.

Preferably, the pneumatic tire includes: a tread portion; a sidewall portion; a bead portion; a carcass extending from the tread portion via the sidewall portion to the bead portion; and a breaker portion located outwardly from the carcass in a radial direction of the tire, wherein the tread portion, the breaker portion, and the sidewall portion include a tread rubber, a breaker rubber, and a sidewall rubber, respectively, all of which have a volume specific resistance of $1\times10^8$ Ω·cm or more, wherein the pneumatic tire includes: an inner sidewall rubber layer that is placed between the carcass and the sidewall rubber; a breaker cushion rubber that is placed in contact with the inner sidewall rubber layer and placed below both ends of a breaker; a coating rubber that is placed so as to cover an upper side of the breaker portion while having a contact area with the breaker cushion rubber; a conducting rubber that is embedded in the tread portion so as to be in contact with the coating rubber and partially exposed on the tread surface; and a bead portion rubber that is placed in contact with the inner sidewall rubber layer and placed in an area of the bead portion which

comes into contact with a rim flange, wherein the bead portion rubber is at least one of the clinch rubber and the chafer rubber, and wherein all of the inner sidewall rubber layer, the breaker cushion rubber, the coating rubber, the conducting rubber, and the bead portion rubber have a volume specific resistance of less than $1\times10^8$ Ω·cm.

The conducting rubber is preferably formed continuously in a circumferential direction of the tire.

ADVANTAGEOUS EFFECTS OF INVENTION

According to the first aspect of the present invention, provided is a rubber composition for an inner sidewall layer and/or a breaker cushion, including a rubber component including two or more diene rubbers, and carbon black having a nitrogen adsorption specific surface area of 400 $m^2/g$ or more in an amount of 5 to 30 parts by mass per 100 parts by mass of the rubber component, wherein the rubber composition has a degree of carbon black dispersion determined by counting agglomerates based on JIS K 6812 "Method for the assessment of the degree of pigment or carbon black dispersion in polyolefin pipes, fittings and compounds" of 90% or more. Therefore, it is possible to prevent the accumulation of static electricity during the running of the tire while keeping the rolling resistance low, suppress an increase over time in electrical resistance of the tire, and improve durability (high-speed durability, and cyclic fatigue durability (crack resistance) ) . Consequently, a pneumatic tire can be provided which offers excellent fuel economy, is prevented from accumulation of static electricity during the running of the tire throughout the life of the tire, and has excellent durability.

In the first aspect of the present invention, it should be noted that when referred to simply as "durability", the term encompasses both high-speed durability and cyclic fatigue durability (crack resistance).

According to the second aspect of the present invention, provided is a rubber composition for a clinch and/or a chafer, including a rubber component including two or more diene rubbers, and carbon black having a nitrogen adsorption specific surface area of 400 $m^2/g$ or more in an amount of 5 to 30 parts by mass per 100 parts by mass of the rubber component, wherein the rubber composition has a degree of carbon black dispersion determined by counting agglomerates based on JIS K 6812 "Method for the assessment of the degree of pigment or carbon black dispersion in polyolefin pipes, fittings and compounds" of 90% or more. Therefore, it is possible to prevent the accumulation of static electricity during the running of the tire while keeping the rolling resistance low, suppress an increase over time in electrical resistance of the tire, and improve durability (particularly, rim chafing resistance). Consequently, a pneumatic tire can be provided which offers excellent fuel economy, is prevented from accumulation of static electricity during the running of the tire throughout the life of the tire, and has excellent durability.

In the second aspect of the present invention, it should be noted that when referred to simply as "durability", the term encompasses both high-speed durability and rim chafing resistance.

BRIEF DESCRIPTION OF THE DRAWINGS

Fig. 1 is the upper right half of a cross-sectional view of the pneumatic tire of the present invention.

Fig. 2 is a schematic cross-sectional view conceptually showing an instrument for measuring the electrical resistance of a tire.

DESCRIPTION OF EMBODIMENTS

(First aspect of the present invention)

The rubber composition for an inner sidewall layer and/or a breaker cushion according to the first aspect of the present invention (also referred to as "rubber composition of the first aspect of the present invention") contains a rubber component including two or more diene rubbers, and carbon black having a nitrogen adsorption specific surface area of 400 $m^2/g$ or more in an amount of 5 to 30 parts by mass per 100 parts by mass of the rubber component, and the rubber composition has a degree of carbon black dispersion determined by counting agglomerates based on JIS K 6812 "Method for the assessment of the degree of pigment or carbon black dispersion in polyolefin pipes, fittings and compounds" of 90% or more.

In the present invention, in order to secure durability, a rubber composition containing two or more diene rubbers is prepared, and carbon black having excellent conductivity and a nitrogen adsorption specific surface area that is equal to or greater than a specific value (also referred to as "carbon black with a high specific surface area") is added in a specific amount into the composition. In addition, regarding the dispersibility of the carbon black, the degree of carbon black dispersion determined by counting agglomerates based on JIS K 6812 is set to be equal to or greater than a specific value. In this manner, it is possible to efficiently prevent the accumulation of static electricity while keeping rolling

resistance low, and to efficiently prevent the accumulation of static electricity throughout the life of the tire, and improve durability.

In the related art, regarding the design of conductive rubbers for preventing the accumulation of static electricity of the tire, investigations have been made focusing only on how small amount of carbon black having a high specific surface area is used to make the rubber electrically conductive. This leads to the fact that the electrical resistance of the tire increases with the use of the tire or with the passage of time, and that the rubber composition is used in certain dispersion conditions where the conductivity is good (that is, in conditions where carbon black having a high specific surface area is dispersed insufficiently in the rubber composition). Thus, the high-speed durability and various types of durability over time have not sufficiently been examined. Furthermore, the increase in electrical resistance of the tire caused with the use of the tire or with the passage of time has not been considered.

The present invention pays attention to the fact that it is very difficult to disperse carbon black having a nitrogen adsorption specific surface area that is equal to or greater than a specific value well in a rubber composition. Thus, the present invention enhances the dispersibility of the carbon black, thereby making it possible not only to prevent the accumulation of static electricity during the running of the tire while keeping the rolling resistance low, but also to suppress an increase over time in electrical resistance of the tire, efficiently prevent the accumulation of static electricity during the running of the tire throughout the life of the tire, and improve durability, which has not been focused on at all so far.

(Rubber composition for inner sidewall layer and/or breaker cushion)

The rubber composition of the first aspect of the present invention contains two or more diene rubbers as the rubber component. This enables enhanced durability. The diene rubbers usable in the present invention are not particularly limited, and examples thereof include natural rubber (NR), epoxidized natural rubber (ENR), and synthetic diene rubbers (isoprene rubber (IR), butadiene rubber (BR), styrene butadiene rubber (SBR), styrene isoprene butadiene rubber (SIBR), chloroprene rubber (CR), acrylonitrile butadiene rubber (NBR), ethylene propylene diene rubber (EPDM), butyl rubber (IIR), halogenated butyl rubber (X-IIR), and the like). Among these, NR, ENR, BR, and SBR are preferred, NR, ENR, and BR are more preferred, and a combination of NR with ENR and/or BR is even more preferred, for the reasons that durability can be improved since these rubbers exhibit good strength, flex crack growth resistance, and crack resistance, and that they are used for tires and their costs are relatively low.

If NR is used in combination with BR, the rolling resistance is kept lower, and the dispersibility of carbon black and durability are further enhanced. Moreover, the flex crack growth resistance and crack resistance can also be further improved. If NR is used in combination with ENR, the flex crack growth resistance and crack resistance can be improved to a certain extent as above, and it is possible to care for the environment since the naturally-occurring one is used together.

The NR is not particularly limited, and for example, those generally used in the tire industry, such as SIR20, RSS#3, and TSR20, may be used.

When the rubber composition contains NR, the content of NR in 100% by mass of the rubber component is preferably 40% by mass or more, and more preferably 50% by mass or more. If the content is less than 40% by mass, sufficient mechanical strength may not be easily obtained. The content of NR is preferably 80% by mass or less, and more preferably 70% by mass or less. If the content exceeds 80% by mass, the blending ratio of another rubber to be blended such as BR or ENR may be reduced too much, which may lead to some problems with flex crack growth resistance and crack resistance.

As the ENR, commercially available epoxidized natural rubbers may be used, or natural rubber may be epoxidized and used. The method for epoxidizing natural rubber is not particularly limited, and examples thereof include a chlorohydrin method, a direct oxidation method, a hydrogen peroxide method, an alkyl hydroperoxide method, and a peracid method. For example, mention may be made of a method including reacting natural rubber with an organic peracid such as peracetic acid or performic acid.

The epoxidation degree of ENR is preferably 5 mol% or more, and more preferably 10 mol% or more. If the epoxidation degree of ENR is less than 5 mol%, the effects to be produced by epoxidation may not be obtained, and the flex crack growth resistance is less likely to be sufficiently enhanced even if the ENR is blended with NR or the like. Also, the epoxidation degree of ENR is preferably 60 mol% or less, and more preferably 40 mol% or less. If the epoxidation degree of ENR exceeds 60 mol%, polymer components tend to become a gel. In addition, excellent dispersibility may not be obtained easily when carbon black or silica is added. The epoxidation degree can be calculated by nuclear magnetic resonance (NMR) spectroscopy.

When the rubber composition contains ENR, the content of ENR in 100% by mass of the rubber component is preferably 20% by mass or more, and more preferably 30% by mass or more. If the content is less than 20% by mass, the flex crack growth resistance is less likely to be sufficiently enhanced even if the ENR is blended with NR or the like. The content of ENR is preferably 60% by mass or less, and more preferably 50% by mass or less. If the content exceeds 60% by mass, the amount of polymers having a low SP value (solubility parameter) added becomes relatively small, and therefore excellent dispersibility may not be obtained easily when carbon black or silica is added.

The BR is not particularly limited, and examples thereof include BR with high cis content, such as BR1220 manufactured by ZEON CORPORATION and BR130B and BR150B manufactured by UBE INDUSTRIES, LTD., BR containing syndiotactic polybutadiene crystals, such as VCR412 and VCR617 manufactured by UBE INDUSTRIES, LTD, and the like. Among these, BR having a cis content of 90% by mass or more is preferred since it contributes to good properties in terms of abrasion resistance, durability, and rolling resistance.

When the rubber composition contains BR, the content of BR in 100% by mass of the rubber component is preferably 20% by mass or more, and more preferably 30% by mass or more. If the content is less than 20% by mass, the flex crack growth resistance and crack resistance are less likely to be sufficiently improved. The content of BR is preferably 60% by mass or less, and more preferably 50% by mass or less. If the content exceeds 60% by mass, the content of NR or the like becomes relatively small, and therefore the mechanical strength may be lowered.

In the present invention, carbon black having a nitrogen adsorption specific surface area ($N_2SA$) of 400 $m^2/g$ or more (carbon black with a high specific surface area) is used. The carbon black has a nitrogen adsorption specific surface area of 400 $m^2/g$ or more, preferably 500 $m^2/g$ or more, more preferably 700 $m^2/g$ or more, even more preferably 900 $m^2/g$ or more, and particularly preferably 1100 $m^2/g$ or more. If $N_2SA$ is less than 400 $m^2/g$, sufficient conductivity (for preventing the accumulation of static electricity) may not be obtained, and the properties in terms of rolling resistance may not be improved when the carbon black is added in an amount required for the same conductivity. The $N_2SA$ is preferably 2000 $m^2/g$ or less, more preferably 1500 $m^2/g$ or less, and even more preferably 1350 $m^2/g$ or less. If the $N_2SA$ exceeds 2000 $m^2/g$, the carbon black tends to be difficult to disperse, thereby leading to poor fuel economy and durability. Moreover, the electrical resistance of the tire tends to increase greatly over time. In addition, preparing such carbon black is difficult and the cost may increase unnecessarily. In the present invention, the $N_2SA$ of carbon black is measured according to JIS K 6217-2:2001.

The carbon black preferably has a dibutyl phthalate (DBP) oil absorption of 180 ml/100 g or more, more preferably 300 ml/100 g or more, even more preferably 400 ml/100 g or more, and particularly preferably 450 ml/100 g or more. In such a case, good antistatic properties (properties in terms of preventing the accumulation of static electricity) can be compatible with good properties in terms of rolling resistance, and good processability can be maintained by suppressing the viscosity increase of the rubber composition. Also, the DBP oil absorption of carbon black is preferably 1000 ml/100 g or less, and more preferably 500 ml/100 g or less. Preparing carbon black having such a high DBP oil absorption as exceeding 1000 ml/100 g is difficult and the cost may increase.

The DBP oil absorption of carbon black is measured based on JIS K 6217-4:2001.

The content of the carbon black is 5 parts by mass or more, preferably 8 parts by mass or more, per 100 parts by mass of the rubber component. If the content is less than 5 parts by mass, sufficient conductivity may not be obtained. The content is 30 parts by mass or less, preferably 25 parts by mass or less, and more preferably 15 parts by mass or less, per 100 parts by mass of the rubber component. If the content exceeds 30 parts by mass, the dispersibility, fuel economy, and durability may deteriorate, and the electrical resistance of the tire may increase greatly over time.

The rubber composition of the first aspect of the present invention preferably further contains silica. The silica is not particularly limited, and those prepared by a wet method or a dry method may be used. When silica is added, it is then possible to keep rolling resistance lower while securing reinforcement, and to secure flex crack growth resistance, mechanical strength and the like necessary for the inner sidewall rubber layer and the breaker cushion rubber. Moreover, the addition of silica enables the rubber composition to have improved scorch resistance.

The silica preferably has a nitrogen adsorption specific surface area (measured by the BET method) in the range of, for example, 50 to 300 $m^2/g$, and more preferably of 70 to 250 $m^2/g$. In the present invention, it should be noted that the nitrogen adsorption specific surface area of silica is measured by the BET method based on ASTM D3037-81.

When the rubber composition contains silica, the content of silica is preferably 2 to 55 parts by mass, more preferably 5 to 40 parts by mass, even more preferably 10 to 35 parts by mass, and particularly preferably 15 to 30 parts by mass, per 100 parts by mass of the rubber component. When the content of silica is in that range, the effects of the present invention are more favorably obtained.

When the rubber composition contains silica, it is preferable that a silane coupling agent be added together with the silica. As the silane coupling agent, any silane coupling agents that have been used together with silica in the rubber industry may be used. Examples thereof include sulfide silane coupling agents such as bis(3-triethoxysilylpropyl)-tetrasulfide, mercapto silane coupling agents such as 3-mercaptopropyltrimethoxysilane, vinyl silane coupling agents such as vinyltriethoxysilane, amine silane coupling agents such as 3-aminopropyltriethoxysilane, glycidoxy silane coupling agents such as $\gamma$-glycidoxypropyltriethoxysilane, nitro silane coupling agents such as 3-nitropropyltrimethoxysilane, chloro silane coupling agents such as 3-chloropropyltrimethoxysilane, and the like. Among these, sulfide silane coupling agents are preferred, and bis(3-triethoxysilylpropyl)tetrasulfide is more preferred. The amount of the silane coupling agent added is preferably 5 to 15 parts by mass per 100 parts by mass of the silica.

In the rubber composition of the first aspect of the present invention, compounding agents that are generally used for the preparation of rubber compositions may be added appropriately in addition to the above components, and examples thereof include reinforcing fillers such as clay, zinc oxide, stearic acid, processing aids, various antioxidants,

softeners, plasticizers, tackifiers, vulcanizing agents such as sulfur, vulcanization accelerators, and the like.

As the vulcanizing agent, organic peroxides and sulfur vulcanizing agents may be used. Suitable examples of the organic peroxides include dicumyl peroxide, t-butylperoxybenzene, and di-t-butylperoxy-diisopropylbenzene. Examples of the sulfur vulcanizing agents include sulfur and morpholine disulfide, and sulfur can be suitably used.

Examples of the vulcanization accelerator include sulfenamide, thiazole, thiuram, thiourea, guanidine, dithiocarbamate, aldehyde-amine or aldehyde-ammonia, imidazoline, and xanthate vulcanization accelerators.

The rubber composition of the first aspect of the present invention can be prepared by a usual method. That is, the rubber composition can be prepared by, for example, a method including kneading components mentioned above with a Banbury mixer, a kneader, an open roll mill, or the like and then vulcanizing the resultant mixture.

The rubber composition of the first aspect of the present invention preferably has a volume specific resistance measured at 10 V of less than $1\times10^8$ Ω·cm, more preferably $1\times10^7$ Ω·cm or less, even more preferably $1\times10^{6.5}$ Ω·cm or less, and particularly preferably $1\times10^6$ Ω·cm or less. Also, the volume specific resistance is preferably $1\times10^3$ Ω.cm or more, and more preferably $1\times10^4$ Ω.cm or more. When the volume specific resistance is in that range, the effects of the present invention are more favorably obtained. In the present invention, it should be noted that the volume specific resistance can be measured by the method described in EXAMPLES. Hereinafter, in the present invention, when referred to simply as "volume specific resistance", it means a volume specific resistance measured at 10 V.

The rubber composition of the first aspect of the present invention has a degree of carbon black dispersion determined by counting agglomerates based on JIS K 6812 "Method for the assessment of the degree of pigment or carbon black dispersion in polyolefin pipes, fittings and compounds" of 90% or more, preferably 92% or more, and more preferably 95% or more. If the degree of carbon black dispersion is less than 90%, the dispersibility of carbon black tends to be low, thereby leading to poor fuel economy and durability. Moreover, the electrical resistance of the tire tends to increase greatly over time. Here, the degree of carbon black dispersion can be determined by the method described in EXAMPLES.

The dispersibility of carbon black with a high specific surface area is very poor. Therefore, generally, when the carbon black with a high specific surface area is added, the degree of carbon black dispersion becomes less than 90%. Accordingly, the fuel economy and durability tend to deteriorate, and the electrical resistance of the tire tends to increase greatly over time.

In the case that carbon black with a high specific surface area is added, examples of the method for setting the degree of carbon black dispersion to be equal to or greater than a specific value include, for example, the following methods.

It is considered that carbon black generally has an SP value (solubility parameter) of 9.6 to 10.5, which is higher than the SP value of diene rubbers used for tires. Accordingly, unless a diene rubber having a lower SP value is first kneaded with the carbon black with a high specific surface area, the carbon black is unevenly distributed to a diene rubber having a high SP value and the dispersibility of carbon black deteriorates greatly. For this reason, the rubber composition of the first aspect of the present invention, in which two or more diene rubbers are added, is preferably obtained by a preparation method including, first, kneading at least one rubber including a diene rubber having a low SP value with the carbon black with a high specific surface area until the carbon black with a high specific surface area is dispersed to some extent in the rubber including a diene rubber having a low SP value, and then adding and kneading at least one rubber including a diene rubber having a high SP value. In this manner, the degree of carbon black dispersion can be set to be equal to or greater than a specific value.

Specifically, it is preferable that the rubber composition be obtained by a preparation method including: a base kneading step 1 of kneading at least one rubber including a diene rubber having the lowest SP value among the two or more diene rubbers with the carbon black with a high specific surface area; and a base kneading step 2 of kneading a kneaded mixture obtained by the base kneading step 1 with at least one rubber including a diene rubber having the highest SP value among the two or more diene rubbers. For example, when NR as well as BR and/or ENR are added as the diene rubbers, at least one rubber including NR may be kneaded with the carbon black with a high specific surface area in the base kneading step 1, and then a kneaded mixture obtained by the base kneading step 1 may be kneaded with at least one rubber including BR and/or ENR in the base kneading step 2.

After completion of the base kneading step 2, a final kneading step of adding and kneading a vulcanizing agent and a vulcanization accelerator into a kneaded mixture obtained by the base kneading step 2 is performed. In this manner, a rubber composition having a degree of carbon black dispersion that is equal to or greater than a specific value is obtained.

Here, it is more preferable that the rubber composition be obtained by the preparation method further including a rekneading step of rekneading a kneaded mixture obtained by the base kneading step 2, before the final kneading step. By performing the rekneading step, it is possible to further enhance the dispersibility of carbon black and further improve fuel economy and durability, and to favorably suppress an increase over time in electrical resistance of the tire.

In the rubber composition, the dispersion ratio (measured by an SPM method) of carbon black in the phase of a diene rubber having the highest SP value is preferably 1 or more. Also, the dispersion ratio is preferably 5 or less,

more preferably 3 or less, even more preferably 2 or less, and particularly preferably 1.5 or less. When the dispersion ratio is in that range, this indicates that carbon black is dispersed well in the rubber composition containing two or more diene rubbers. Here, the dispersion ratio can be measured by the method described in EXAMPLES.

In the rubber composition, the dispersion ratio (% by volume, measured by an NMR method) of carbon black in the phase of a diene rubber having the highest SP value is preferably 40 or more, and more preferably 42 or more. Also, the dispersion ratio is preferably 80 or less, more preferably 65 or less, and even more preferably 57 or less. When the dispersion ratio is in that range, this indicates that carbon black is dispersed well in the rubber composition containing two or more diene rubbers. Here, the dispersion ratio can be measured by the method described in EXAMPLES.

The method for setting the degree of carbon black dispersion to be equal to or greater than a specific value is not limited to the above methods. Those other than the above methods include a method of using carbon black with a high specific surface area in the form of a masterbatch (particularly, a wet masterbatch) in advance, a method of repeatedly performing kneading until the dispersibility of carbon black becomes equal to or greater than a specific value, and the like.

(Pneumatic tire)

The pneumatic tire of the first aspect of the present invention can be prepared by a usual method using the above rubber composition. That is, an unvulcanized rubber composition in which the above components are mixed is extruded and processed into the shape of a tire component such as an inner sidewall rubber layer and/or a breaker cushion rubber, and then molded together with other tire components by a usual method in a tire building machine, whereby an unvulcanized tire is formed. The unvulcanized tire is heated and pressurized in a vulcanizer, thereby obtaining a tire.

The pneumatic tire of the first aspect of the present invention can be used as a tire for passenger cars, a tire for trucks and buses, a tire for two-wheel vehicles, a high performance tire, or the like. It should be noted that the high performance tire used herein refers to a tire that is particularly excellent in grip performance, and conceptually includes racing tires which are used for racing cars.

Hereinafter, an example of the pneumatic tire of the first aspect of the present invention will be described with a drawing.

<Basic structure>

The structure of the pneumatic tire of the first aspect of the present invention is illustrated, for example, in Fig. 1 showing the upper right half of a cross-sectional view of a tire. A tire 1 includes a tread rubber 7 that forms a tread portion; a sidewall rubber 8 that forms a pair of sidewall portions extending inwardly from the both ends of the tread rubber 7 in the radial direction of the tire; and a clinch rubber 3 that forms a clinch portion located at an inner end of each sidewall portion and a chafer rubber 2 that forms a chafer portion located on top of a rim. A carcass 10 is bridged between the clinch portions or the chafer portions, and a breaker rubber 9 that forms a breaker portion is placed outwardly from the carcass 10 in the radial direction of the tire. The carcass 10 is formed of one or more sheets of carcass plies in which carcass codes are arranged. The carcass plies extend from the tread portion via the sidewall portion are then folded back around a bead core 13 and a bead apex 11 extending toward the sidewall from the top of the bead core 13, from the inside to the outside in the axis direction of the tire, and are then latched by a folding-back portion. The breaker portion is formed of two or more sheets of breaker plies in which breaker codes are arranged, and the breaker codes are superposed on one another while changing their direction such that the breaker codes cross one another, between the breaker plies. In the pneumatic tire of the first aspect of the present invention, for example, a coating rubber (undertread) 5 that covers an upper side of the breaker portion is provided between the tread portion (tread rubber, base tread) and the breaker portion although the present pneumatic tire is not limited to this structure. A breaker cushion rubber 4 is placed between the carcass ply and the both ends of the breaker portion and the sidewall portion while having a contact area with the coating rubber 5. In addition, a conducting rubber 6 is placed in the tread rubber 7 so as to be in contact with the coating rubber 5 and partially exposed on the ground contact surface. Moreover, an inner sidewall rubber layer 14 extending at least from the breaker cushion rubber 4 to a position in contact with the clinch rubber 3 or chafer rubber 2, is placed between the carcass 10 and the sidewall rubber 8 while having a contact area with the breaker cushion rubber 4. The pneumatic tire 1 has a structure in which the conducting rubber 6, the coating rubber 5, the breaker cushion rubber 4, the inner sidewall rubber layer 14, and the clinch rubber 3 or the chafer rubber 2 are electrically connected to one another.

When the above structure is employed, the static electricity generated in the bead portion rubber located in the contact area with the rim or generated in the ground contact area during the running of the tire is discharged outside the tire through the conductive rubber components that are electrically connected to one another in the tire. Accordingly, even if silica is used in the tread rubber, the breaker rubber, or the sidewall rubber, the electrical resistance of the tire can be lowered.

<Tread rubber, breaker rubber, and sidewall rubber>

The volume specific resistances of the tread rubber, the breaker rubber, and the sidewall rubber, which form the tire, are all set to $1\times10^8$ Ω.cm or more. In the related art, carbon black has been used as a rubber reinforcing agent (filler), but if carbon black is replaced by silica, the rolling resistance can be reduced. In addition, not being a material derived from fossil fuel such as petroleum, silica is, in general, suitably employed in view of the environmental issue compared with carbon black as a material derived from petroleum or coal. However, if silica is used, the volume specific resistance tends to increase. In the present invention, when the rubber composition is based on a silica blend, it is possible to reduce the rolling resistance of the tire, and maintain the basic properties of rubber compositions such as processability, and at the same time to improve the problem with the rubber composition having as high an electrical resistance as having a volume specific resistance of $1\times10^8$ Ω.cm or more by means of the electrically connected structure described above.
In the pneumatic tire of the first aspect of the present invention, 50% by mass or more of fillers contained in each of the tread rubber, the breaker rubber, and the sidewall rubber are preferably silica. When silica accounts for 50% or more of fillers, the effect of reducing the rolling resistance of the tire becomes better. The proportion of silica among fillers is more preferably 70% by mass or more, and even more preferably 90% by mass or more. All the fillers may be silica. However, for the purpose of adjusting the conductivity or mechanical strength of each of the tread rubber, the breaker rubber, and the sidewall rubber, other fillers may be used in combination.
Silica may be added in an amount of, for example, 5 to 100 parts by mass per 100 parts by mass of the rubber component in each of the tread rubber, the breaker rubber, and the sidewall rubber. When the amount is 5 parts by mass or more, the rolling resistance of the tire can be reduced, and when the amount is 100 parts by mass or less, it is possible to prevent well the deterioration of processability caused by a viscosity increase of the unvulcanized rubber composition in the preparation of the tread rubber, the breaker rubber, and the sidewall rubber, and the excessive increase of the cost.
The same silicas as those usable in the rubber composition of the first aspect of the present invention may be used.
The nitrogen adsorption specific surface area (measured by the BET method) of the silica used for the tread rubber, the breaker rubber, and the sidewall rubber is in the range of, for example, 100 to 300 $m^2/g$, preferably 150 to 250 $m^2/g$. When the nitrogen adsorption specific surface area is 100 $m^2/g$ or more, a reinforcing effect is sufficiently obtained, thereby enabling the tire to have well enhanced abrasion resistance. Conversely, when the nitrogen adsorption specific surface area is 300 $m^2/g$ or less, the processability in the preparation of each rubber becomes better, and good handling stability of the tire is secured.

<Coating rubber>

The coating rubber 5 in the present invention is placed in contact with the breaker cushion rubber 4 and the conducting rubber 6, placed so as to cover the upper part of the breaker portion, and has a volume specific resistance set to be less than $1\times10^8$ Ω·cm. When the volume specific resistance is less than $1\times10^8$ Ω·cm, the effect of enhancing the conductivity of the tire is obtained to a desired extent. Also, the volume specific resistance is preferably set to $1\times10^7$ Ω·cm or less, more preferably $1\times10^6$ Ω.cm or less, and even more preferably $1\times10^{5.5}$ Ω.cm or less. Moreover, the volume specific resistance is preferably set to $1\times10^3$ Ω.cm or more, and more preferably $1\times10^4$ Ω·cm or more.
When the coating rubber 5 has a thickness of 0.2 mm or more, the effect of enhancing the conductivity of the tire is obtained to a desired extent. When the thickness is 3.0 mm or less, the properties in terms of the rolling resistance of the tire do not deteriorate greatly. The thickness of the breaker cushion rubber is preferably in the range of 0.5 to 2.0 mm, and particularly preferably 0.9 to 1.5 mm. The coating rubber 5 may be any one as long as it has portions in contact with the breaker cushion rubber and with the conducting rubber. The coating rubber 5 may be provided extending over the entire surface, or provided partially extending to a position where the conducting rubber is located, or to the extent exceeding the position, between the tread portion and the breaker portion.
In addition, in the portions where the coating rubber is in contact with the breaker cushion rubber and the conducting rubber, respectively, it is preferable that the coating rubber have a strip portion that is in contact with the breaker cushion rubber by a width of 5 mm or more along the circumferential direction of the tire. It is more preferable that the portion be in contact with the breaker cushion rubber by 10 mm or more. When the breaker cushion rubber is in contact with the coating rubber in these conditions, the conductive effects on the tire are sufficiently obtained. The coating rubber is preferably in contact with the conducting rubber over the entire surface of the conducting rubber in the width direction and/or the circumferential direction of the tire.
In the present invention, the coating rubber preferably contains carbon black in an amount of 5 to 80 parts by mass, more preferably 10 to 60 parts by mass, and even more preferably 20 to 50 parts by mass, per 100 parts by mass of the rubber component. When carbon black is added in an amount of 5 parts by mass or more, the conductivity of the

coating rubber can be enhanced.

The nitrogen adsorption specific surface area of the carbon black used for the coating rubber is preferably 70 to 2000 $m^2/g$. In this case, the mechanical strength of the coating rubber is good, and the case is preferred in view of securing processability in the preparation. The nitrogen adsorption specific surface area is more preferably 100 to 1500 $m^2/g$. In addition, as the carbon black, wood tar carbon black and the like that are resources other than petroleum can also be suitably used. Moreover, in the coating rubber, the carbon black with a high specific surface area used in the present invention may be used alone or together with another carbon black.

The coating rubber may contain silica as a filler, in addition to carbon black.

The content of silica in the coating rubber is preferably 5 to 60 parts by mass, and more preferably 20 to 40 parts by mass, per 100 parts by mass of the rubber component. When the content is 5 parts by mass or more, the rolling resistance of the tire can be reduced. If the content exceeds 60 parts by mass, the properties in terms of rolling resistance and processability may deteriorate.

The nitrogen adsorption specific surface area (measured by the BET method) of the silica used for the coating rubber is preferably in the range of 80 to 250 $m^2/g$, for example. When the nitrogen adsorption specific surface area is 80 $m^2/g$ or more, a reinforcing effect is sufficiently obtained, thereby enabling the tire to have well enhanced durability.

<Breaker cushion rubber>

The breaker cushion rubber 4 in the present invention is provided between the carcass plies forming the carcass 10 described later and an edge part of the breaker portion as well as the sidewall portion, and provided below the both ends of a breaker while having a contact area with the inner sidewall rubber layer 14, and has a volume specific resistance set to be less than $1\times10^8$ Ω·cm. When the volume specific resistance is less than $1\times10^8$ Ω·cm, the effect of enhancing the conductivity of the tire is obtained. The volume specific resistance of the breaker cushion rubber 4 is preferably set to $1\times10^7$ Ω·cm or less, more preferably $1\times10^{6.5}$ Ω.cm or less, and even more preferably $1\times10^6$ Ω.cm or less. Also, the volume specific resistance is preferably set to $1\times10^3$ Ω.cm or more, and more preferably $1\times10^4$ Ω.cm or more.

As described above, the breaker cushion rubber may be any one as long as it is formed continuously or discontinuously in the circumferential direction of the tire between the carcass plies forming the carcass and the edge part of the breaker portion as well as the sidewall. The thickness, shape, and the like of the breaker cushion rubber are not particularly limited.

The breaker cushion rubber 4 is preferably prepared from the rubber composition for a breaker cushion of the present invention.

<Conducting rubber>

In the present invention, the conducting rubber is embedded in the tread portion, and one portion of the conducting rubber is exposed on the ground contact surface of the tire while another portion thereof is connected to (or in contact with) the coating rubber. Thus, the conducting rubber can efficiently discharge static electricity generated during the running of the pneumatic tire to the ground contact surface. In Fig. 1, the conducting rubber 6 is shown to have a structure in which the conducting rubber is embedded in one place in the central part of the tread portion, but a plurality of conducting rubbers may be embedded. Moreover, the width of the conducting rubber in the width direction of the tire is, for example, 0.2 to 10 mm, preferably 0.9 to 1.5 mm. If the width is less than 0.2 mm, the conducting effect is small. Conversely, if the width exceeds 10 mm, the ground contact area of the conducting rubber in the tread portion increases relatively, which may deteriorate the ground contact properties, and deteriorate the properties in terms of rolling resistance and abrasion resistance. In addition, the conducting rubber is preferably formed as a continuous layer in the circumferential direction of the tire, but it may be formed intermittently in the circumferential direction of the tire.

The volume specific resistance of the conducting rubber is set to be less than $1\times10^8$ Ω.cm which is lower than those of the tread rubber, the breaker rubber, and the sidewall rubber. When the volume specific resistance is less than $1\times10^8$ Ω·cm, the conductivity of the tire is improved and the effect of discharging static electricity is obtained. The volume specific resistance of the conducting rubber is more preferably $1\times10^7$ Ω·cm or less, even more preferably $1\times10^6$ Ω·cm or less, and particularly preferably $1\times10^{5.5}$ Ω·cm or less. The lower limit of the volume specific resistance of the conducting rubber is not particularly limited.

The conducting rubber may have substantially the same composition as the breaker cushion rubber, and the same carbon black or silica as above may be added. Also, in view of improving the ground contact properties, the conducting rubber can have a composition designed to impart conductivity, based on the composition of the tread rubber.

<Inner sidewall rubber layer>

The inner sidewall rubber layer 14 in the present invention is placed so as to extend at least from the breaker

cushion rubber 4 to a position in contact with the clinch rubber 3 or chafer rubber 2, between the carcass 10 and the sidewall rubber 8 while having a contact area with the breaker cushion rubber 4. For example, the inner sidewall rubber layer 14 has a structure in which the top of the inner sidewall rubber layer 14 is electrically connected to the breaker cushion rubber 4 while the bottom thereof is electrically connected to the clinch rubber 3 or chafer rubber 2. The volume specific resistance of the inner sidewall rubber layer 14 is set to be less than $1\times10^8$ Ω·cm. When the volume specific resistance is less than $1\times10^8$ Ω·cm, the effect of enhancing the conductivity of the tire is obtained. The volume specific resistance of the inner sidewall rubber layer 14 is preferably set to $1\times10^7$ Ω·cm or less, more preferably $1\times10^{6.5}$ Ω.cm or less, even more preferably $1\times10^6$ Ω.cm or less, and particularly preferably $1\times10^{5.5}$ Ω·cm or less. If a rubber composition in which a large amount of conductive components are added is employed, the electrical resistance is reduced, but an electrochemical reaction that may occur in an area where the tire comes into contact with the rim is accelerated, whereby the rim will be easily rusted. In order to avoid such a problem, the volume specific resistance of the breaker cushion rubber is preferably set to $1\times10^3$ Ω.cm or more, and more preferably $1\times10^4$ Ω.cm or more.

When the inner sidewall rubber layer 14 has a thickness of 0.2 mm or more, the effect of enhancing the conductivity of the tire is obtained to a desired extent, and when the thickness is 1.0 mm or less, the properties in terms of the rolling resistance of the tire do not deteriorate greatly. The thickness of the breaker cushion rubber is particularly preferably in the range of 0.5 to 1.0 mm. The inner sidewall rubber layer 14 may be any one as long as it is placed between the carcass 10 and the sidewall rubber 8 (for example, placed adjacent to the outer side of the carcass 10 and to the inner side of the sidewall rubber 8), and has portions in contact with the breaker cushion rubber and with the bead portion rubber. A portion of the inner sidewall rubber layer 14 may be placed between the carcass and the breaker and formed continuously or discontinuously in the circumferential direction of the tire.

In addition, regarding the portions where the inner sidewall rubber layer is in contact with the breaker cushion rubber and the bead portion rubber, respectively, it is preferable that the inner sidewall rubber layer have a strip portion that is in contact with the breaker cushion rubber by a width of 5 mm or more along the circumferential direction of the tire. It is more preferable that the portion be in contact with the breaker cushion rubber by 10 mm or more. When the inner sidewall rubber layer is in contact with the breaker cushion rubber in these conditions, the conductive effects on the tire are sufficiently obtained. The inner sidewall rubber layer preferably has a portion that is in contact with the bead portion rubber by a width of 5 mm or more along the shape of the carcass. The portion is more preferably in contact with the bead portion rubber by 10 mm or more.

The inner sidewall rubber layer is preferably prepared from the rubber composition for an inner sidewall layer of the present invention.

In the present invention, static electricity can be efficiently discharged through the electrical connection path as shown in Fig. 1, and at the same time the crack resistance can be improved by using the rubber composition for an inner sidewall layer formulated as above. Accordingly, the formation of cracks starting from a ply wound-up portion can be prevented, and the formation of cracks on the sidewall surface and the inner liner surface can also be prevented.

<Bead portion rubber>

In the present invention, the bead portion rubber placed in an area of the bead portion which comes into contact with a rim flange, conceptually includes clinch rubbers and chafer rubbers (chafers and rubber chafers). When a tire runs, the driving force is transmitted from the rim via the bead portion rubber, and at this time, static electricity is likely to be generated due to the friction between the rim and the bead portion rubber. Since the bead portion rubber has a contact area with the inner sidewall rubber layer, static electricity can be efficiently discharged to the ground contact surface through the inner sidewall rubber layer. The clinch rubber or the chafer rubber (chafer or rubber chafer) is electrically connected to the inner sidewall rubber layer 14 in Fig. 1.

Here, the bead portion rubber has a volume specific resistance of less than $1\times10^8$ Ω·cm. When the volume specific resistance is set to be less than $1\times10^8$ Ω.cm, good conductivity of the tire is obtained. The volume specific resistance of the bead portion rubber is preferably $1\times10^7$ Ω.cm or less, more preferably $1\times10^{6.5}$ Ω·cm or less, even more preferably $1\times10^6$ Ω.cm or less, and particularly preferably $1\times10^{5.5}$ Ω.cm or less. The lower limit of the volume specific resistance of the bead portion rubber is not particularly limited. Since the bead portion rubber, that is, the clinch rubber or the chafer rubber (chafer or rubber chafer) is required to have abrasion resistance, rigidity, and hardness, the electrical resistance can be adjusted by the formulation technique for the breaker cushion rubber and the conducting rubber in addition to the formulation design mentioned above. In addition, it is preferable to prepare the bead portion rubber from a rubber composition containing a rubber component including two or more diene rubbers, and carbon black with a high specific surface area in an amount of 5 to 30 parts by mass per 100 parts by mass of the rubber component, wherein the rubber composition has a degree of carbon black dispersion determined by counting agglomerates based on JIS K 6812 "Method for the assessment of the degree of pigment or carbon black dispersion in polyolefin pipes, fittings and compounds" of 90% or more, just like the rubber composition for an inner sidewall layer and/or a breaker cushion of the present invention.

<Carcass>

The carcass 10 extending from the tread portion via the sidewall portion to the bead portion in the present invention is formed of one or more sheets of carcass plies in which carcass codes are arranged. The carcass plies have a structure in which carcass codes are arranged in parallel with one another and are embedded in rubber. Examples of fiber materials forming the carcass codes include rayon, nylon, polyester, aramids, and the like. These may be used alone or as a mixture of two or more kinds thereof. In order to care for the environment, rayon may be used since it is a material from natural resources. In this case, rayon is preferably used in an amount of 90% by mass or more of the fiber materials forming the carcass codes.

The volume specific resistance of the ply rubber is not particularly limited, and can be set just like the tread rubber, the breaker rubber, and the sidewall rubber. Moreover, the volume specific resistance of the ply rubber may be set to be less than $1\times10^8$ Ω·cm. By doing this, in cooperation with the adjacent inner sidewall rubber layer, the ply rubber allows the tire to have improved conductivity and therefore the effect of discharging static electricity. In this case, the volume specific resistance of the ply rubber may preferably be set to $1\times10^7$ Ω.cm or less, more preferably $1\times10^6$ Ω·cm or less, and even more preferably $1\times10^{5.5}$ Ω·cm or less. The lower limit of the volume specific resistance of the ply rubber is not particularly limited.

The ply rubber in the present invention may have substantially the same composition as the coating rubber, and the same carbon black or silica as above may be added. In addition, in view of improving the adhesion to the carcass codes, carbon black or the like may be added to impart conductivity, based on the basic formulation of the conventional ply rubber.

In the present invention, the volume specific resistance of the tread rubber, the breaker rubber, and the sidewall rubber is set to $1\times10^8$ Ω.cm or more to maintain the tire performance such as rolling resistance and durability while the volume specific resistance of the inner sidewall rubber layer, the breaker cushion rubber, the coating rubber, the conducting rubber, and the bead portion rubber which are electrically connected to one another is adjusted to a lower value. Accordingly, the static electricity generated in the pneumatic tire can be efficiently discharged via the electrical connection path thus formed.

Moreover, since the inner sidewall rubber layer and/or the breaker cushion rubber are/is prepared from the rubber composition of the first aspect of the present invention, it is possible not only to keep rolling resistance low, and prevent the accumulation of static electricity during the running of the tire, but also to suppress an increase over time in electrical resistance of the tire, efficiently prevent the accumulation of static electricity during the running of the tire throughout the life of the tire, and improve durability. Moreover, when the bead portion rubber (more preferably the clinch rubber and/or chafer rubber) is also prepared from the rubber composition of the first aspect of the present invention, the effects of the present invention are more favorably obtained.

<Rubber compounds for coating rubber, conducting rubber, chafer rubber, clinch rubber, tread rubber, breaker rubber, and sidewall rubber>

The coating rubber, the conducting rubber, the chafer rubber, the clinch rubber, the tread rubber, the breaker rubber, and the sidewall rubber in the pneumatic tire of the first aspect of the present invention are formed from, for example, the following rubber compositions.

Examples of materials usable as the rubber component of each rubber composition include those mentioned for the rubber composition of the first aspect of the present invention. As the rubber component used for the coating rubber, the breaker cushion rubber, the conducting rubber, the chafer rubber, and the clinch rubber, diene rubbers are preferred, and among these, natural rubber, styrene butadiene rubber, butadiene rubber, isoprene rubber, epoxidized natural rubber, and the like are preferred.

In the rubber compositions, compounding agents generally used in rubber compounds for tires as mentioned below may be appropriately added.

In the present invention, silica is preferably added in the tread rubber, the breaker rubber, or the sidewall rubber as described above. When silica is added in the rubber composition, a silane coupling agent is preferably added in an amount of, for example, 1 to 20 parts by mass per 100 parts by mass of the silica. When the silane coupling agent is added in an amount of 1 part by mass or more, the abrasion resistance of the tire is enhanced and the rolling resistance is reduced. Also, when the silane coupling agent is added in an amount of 20 parts by mass or less, there is then less risk of scorching during the kneading and extrusion of the rubber composition, and the cost is less likely to increase unnecessarily. Examples of the silane coupling agent include the same ones as mentioned above.

In the rubber compositions, compounding agents that are generally used for the preparation of rubber compositions may be added appropriately in addition to the above components, and examples thereof include reinforcing fillers such as clay, zinc oxide, stearic acid, processing aids, various antioxidants, softeners, plasticizers, tackifiers, vulcanizing agents such as sulfur, and vulcanization accelerators.

(Second aspect of the present invention)

The rubber composition for a clinch and/or a chafer according to the second aspect of the present invention (also referred to as "rubber composition of the second aspect of the present invention") contains a rubber component including two or more diene rubbers, and carbon black having a nitrogen adsorption specific surface area of 400 $m^2/g$ or more in an amount of 5 to 30 parts by mass per 100 parts by mass of the rubber component, and the rubber composition has a degree of carbon black dispersion determined by counting agglomerates based on JIS K 6812 "Method for the assessment of the degree of pigment or carbon black dispersion in polyolefin pipes, fittings and compounds" of 90% or more.

In the present invention, in order to secure durability, a rubber composition containing two or more diene rubbers is prepared, and carbon black having excellent conductivity and a nitrogen adsorption specific surface area that is equal to or greater than a specific value (also referred to as "carbon black with a high specific surface area") is added in a specific amount into the composition. In addition, regarding the dispersibility of the carbon black, the degree of carbon black dispersion determined by counting agglomerates based on JIS K 6812 is set to be equal to or greater than a specific value. In this manner, it is possible to efficiently prevent the accumulation of static electricity while keeping rolling resistance low, and to efficiently prevent the accumulation of static electricity throughout the life of the tire, and improve durability.

In the related art, regarding the design of conductive rubbers for preventing the accumulation of static electricity of the tire, investigations have been made focusing only on how small amount of carbon black having a high specific surface area is used to make the rubber electrically conductive. This leads to the fact that the electrical resistance of the tire increases with the use of the tire or with the passage of time, and that the rubber composition is used in certain dispersion conditions where the conductivity is good (that is, in conditions where carbon black having a high specific surface area is dispersed insufficiently in the rubber composition). Thus, the high-speed durability and various types of durability over time such as rim chafing resistance have not sufficiently been examined. Furthermore, the increase in electrical resistance of the tire caused with the use of the tire or with the passage of time has not been considered.

The present invention pays attention to the fact that it is very difficult to disperse carbon black having a nitrogen adsorption specific surface area that is equal to or greater than a specific value well in a rubber composition. Thus, the present invention enhances the dispersibility of the carbon black, thereby making it possible not only to prevent the accumulation of static electricity during the running of the tire while keeping the rolling resistance low, but also to suppress an increase over time in electrical resistance of the tire, efficiently prevent the accumulation of static electricity during the running of the tire throughout the life of the tire, and improve durability, which has not been focused on at all so far.

(Rubber composition for clinch and/or chafer)

The rubber composition of the second aspect of the present invention contains two or more diene rubbers as the rubber component. This enables enhanced durability. The diene rubbers usable in the present invention are not particularly limited, and examples thereof include natural rubber (NR), epoxidized natural rubber (ENR), and synthetic diene rubbers (isoprene rubber (IR), butadiene rubber (BR), styrene butadiene rubber (SBR), styrene isoprene butadiene rubber (SIBR), chloroprene rubber (CR), acrylonitrile butadiene rubber (NBR), ethylene propylene diene rubber (EPDM), butyl rubber (IIR), halogenated butyl rubber (X-IIR), and the like). Among these, NR, ENR, BR, and SBR are preferred, NR, BR, and SBR are more preferred, and a combination of NR with BR and/or SBR is even more preferred, for the reason that durability can be improved.

If NR is used in combination with BR and/or SBR, the rolling resistance is kept lower, and the dispersibility of carbon black and durability are further enhanced. Moreover, there are advantages that rim chafing resistance is enhanced due to the enhancement of abrasion resistance, and that high-speed durability is enhanced due to the enhancement of heat resistance.

The NR is not particularly limited, and for example, those generally used in the tire industry, such as SIR20, RSS#3, and TSR20, may be used.

When the rubber composition contains NR, the content of NR in 100% by mass of the rubber component is preferably 40% by mass or more, and more preferably 50% by mass or more. If the content is less than 40% by mass, sufficient mechanical strength may not be easily obtained. The content of NR is preferably 80% by mass or less, and more preferably 70% by mass or less. If the content exceeds 80% by mass, the blending ratio of another rubber to be blended such as BR or SBR may be reduced too much, which may lead to some problems with rim chafing resistance and high-speed durability.

The BR is not particularly limited, and examples thereof include BR with high cis content, such as BR1220 manufactured by ZEON CORPORATION and BR130B and BR150B manufactured by UBE INDUSTRIES, LTD., BR containing syndiotactic polybutadiene crystals, such as VCR412 and VCR617 manufactured by UBE INDUSTRIES, LTD, and the like. Among these, BR having a cis content of 90% by mass or more is preferred since it contributes to

good properties in terms of abrasion resistance, durability, and rolling resistance.

When the rubber composition contains BR, the content of BR in 100% by mass of the rubber component is preferably 20% by mass or more, and more preferably 30% by mass or more. If the content is less than 20% by mass, the rolling resistance tends not to be kept sufficiently low, sufficient dispersibility of carbon black tends not to be obtained, and sufficient durability tends not to be obtained. Moreover, the electrical resistance of the tire tends to increase. The content of BR is preferably 60% by mass or less, and more preferably 50% by mass or less. If the content exceeds 60% by mass, the content of NR or the like becomes relatively small, and therefore the mechanical strength may be lowered.

The SBR is not particularly limited, and examples thereof include emulsion-polymerized SBR (E-SBR), solution-polymerized SBR (S-SBR), modified SBR which is modified with a primary amino group or the like, and the like. Among these, modified SBR is preferred since it has a large effect in improving the properties in terms of rolling resistance (fuel economy) and abrasion resistance.

As the modified SBR, those coupled by tin, silicon, or the like may preferably be used. Examples of the method for coupling modified SBR include a method in which an alkali metal (e.g. Li) or alkaline earth metal (e.g. Mg) at the end of a molecular chain of modified SBR is allowed to react with tin halide, silicon halide, or the like according to a common method.

As the modified SBR, also preferred are copolymers of styrene and butadiene which contain a primary amino group or an alkoxysilyl group. The primary amino group may be bonded to any of a polymerization initiation end, a polymerization termination end, and a main or side chain of the polymer. However, the primary amino group is preferably introduced into the polymerization initiation end or polymerization termination end since the hysteresis loss characteristics can then be improved by inhibiting loss of energy from the polymer end.

Among modified SBRs, in particular, those obtained by modifying a polymerizing end (active end) of solution-polymerized styrene butadiene rubber (S-SBR) with a compound represented by the following formula (1) (modified S-SBR (modified SBR disclosed in JP-A 2010-111753)) can be suitably used. By using such modified SBR, the molecular weight of the polymer can be controlled easily and thus the amount of low-molecular weight components, which can increase tan$\delta$, can be reduced, and the bonding between silica and the polymer chain can be strengthened, whereby the properties in terms of rolling resistance and abrasion resistance can be further improved.

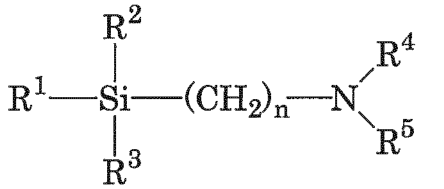 (1)

(wherein $R^1$, $R^2$, and $R^3$ are the same as or different from each other, and each represent an alkyl group, an alkoxy group (preferably an alkoxy group having 1 to 8 carbon atoms, more preferably 1 to 6 carbon atoms, and even more preferably 1 to 4 carbon atoms), a silyloxy group, an acetal group, a carboxyl group (-COOH), a mercapto group (-SH), or a derivative thereof; $R^4$ and $R^5$ are the same as or different from each other, and each represent a hydrogen atom or an alkyl group (preferably an alkyl group having 1 to 4 carbon atoms) ; and n represents an integer (preferably of 1 to 5, more preferably 2 to 4, and even more preferably 3).)

$R^1$, $R^2$, and $R^3$ are each desirably an alkoxy group, and $R^4$ and $R^5$ are each desirably an alkyl group. In this case, the properties in terms of rolling resistance and abrasion resistance can be ensured.

Specific examples of the compound represented by the formula (1) include 3-aminopropyldimethylmethoxysilane, 3-aminopropylmethyldimethoxysilane, 2-dimethylaminoethyltrimethoxysilane, 3-diethylaminopropyltrimethoxysilane, 3-dimethylaminopropyltrimethoxysilane, and the like. These may be used alone, or two or more kinds thereof may be used in combination.

As the method for modifying styrene butadiene rubber with the compound (modifier) represented by the formula (1), techniques known in the related art, such as the methods disclosed in JP-B H06-53768, JP-B H06-57767, JP-T 2003-514078, and the like, may be used. For example, styrene butadiene rubber just needs to be brought into contact with the modifier, and examples of such a method include a method of synthesizing styrene butadiene rubber by anionic polymerization, then adding the modifier in a predetermined amount to the polymer rubber solution, and reacting the modifier with a polymerizing end (active end) of the styrene butadiene rubber, a method of adding the modifier to a solution of styrene butadiene rubber and then causing a reaction therebetween, and the like.

When the rubber composition contains SBR, the content of SBR in 100% by mass of the rubber component is preferably 20% by mass or more, and more preferably 30% by mass or more. If the content is less than 20% by mass, sufficient abrasion resistance may not be obtained easily, for example. The content of SBR is preferably 60% by mass or less, and more preferably 50% by mass or less. If the content exceeds 60% by mass, the content of NR or the like

becomes relatively small, and therefore the mechanical strength may be lowered.

In the present invention, carbon black having a nitrogen adsorption specific surface area ($N_2SA$) of 400 $m^2/g$ or more (carbon with a high specific surface area) is used. The preferred ranges of the nitrogen adsorption specific surface area ($N_2SA$) and the dibutyl phthalate (DBP) oil absorption of the carbon black are the same as in the first aspect of the present invention described above.

The content of the carbon black is 5 parts by mass or more, preferably 10 parts by mass or more, per 100 parts by mass of the rubber component. If the content is less than 5 parts by mass, sufficient conductivity may not be obtained. The content is 30 parts by mass or less, preferably 25 parts by mass or less, and more preferably 20 parts by mass or less, per 100 parts by mass of the rubber component. If the content exceeds 30 parts by mass, the dispersibility, fuel economy, and durability may deteriorate, and the electrical resistance of the tire may increase greatly over time.

The rubber composition of the second aspect of the present invention preferably further contains silica. The silica is not particularly limited, and those prepared by a wet method or a dry method may be used. When silica is added, it is possible to keep rolling resistance lower while securing reinforcement, and to secure abrasion resistance, mechanical strength, and flex crack growth resistance, and the like necessary for the clinch rubber and the chafer rubber. Moreover, the addition of silica enables the rubber composition to have improved scorch resistance.

The silica preferably has a nitrogen adsorption specific surface area (measured by the BET method) in the range of, for example, 50 to 300 $m^2/g$, and more preferably of 70 to 250 $m^2/g$. In the present invention, it should be noted that the nitrogen adsorption specific surface area of silica is measured by the BET method based on ASTM D3037-81.

When the rubber composition contains silica, the content of silica is preferably 2 to 100 parts by mass, more preferably 10 to 90 parts by mass, even more preferably 20 to 85 parts by mass, and particularly preferably 40 to 80 parts by mass, per 100 parts by mass of the rubber component. When the content of silica is in that range, the effects of the present invention are more favorably obtained.

When the rubber composition contains silica, a silane coupling agent is preferably added together with the silica. As the silane coupling agent, the same agents as in the first aspect of the present invention described above may be used. Among these, sulfide silane coupling agents are preferred, and bis(3-triethoxysilylpropyl)tetrasulfide is more preferred. Here, the amount of the silane coupling agent added is preferably 5 to 15 parts by mass per 100 parts by mass of the silica.

In the rubber composition of the second aspect of the present invention, compounding agents that are generally used for the preparation of rubber compositions may be added appropriately in addition to the above components, and examples thereof include reinforcing fillers such as clay, zinc oxide, stearic acid, processing aids, various antioxidants, softeners, plasticizers, tackifiers, vulcanizing agents such as sulfur, and vulcanization accelerators.

As the vulcanizing agent and the vulcanization accelerator, the same agents as in the first aspect of the present invention described above may be used.

The rubber composition of the second aspect of the present invention can be prepared by a usual method. That is, the rubber composition can be prepared by, for example, a method including kneading components mentioned above with a Banbury mixer, a kneader, an open roll mill, or the like and then vulcanizing the resultant mixture.

The rubber composition of the second aspect of the present invention preferably has a volume specific resistance measured at 10 V of less than $1\times10^8$ $\Omega$·cm, more preferably $1\times10^7$ $\Omega$.cm or less, even more preferably $1\times10^{6.5}$ $\Omega$·cm or less, and particularly preferably $1\times10^6$ $\Omega$·cm or less. Also, the volume specific resistance is preferably $1\times10^3$ $\Omega$·cm or more, and more preferably $1\times10^4$ $\Omega$·cm or more. When the volume specific resistance is in that range, the effects of the present invention are more favorably obtained. In the present invention, it should be noted that the volume specific resistance can be measured by the method described in EXAMPLES. Hereinafter, in the present invention, when referred to simply as "volume specific resistance", it means a volume specific resistance measured at 10 V.

The rubber composition of the second aspect of the present invention has a degree of carbon black dispersion determined by counting agglomerates based on JIS K 6812 "Method for the assessment of the degree of pigment or carbon black dispersion in polyolefin pipes, fittings and compounds" of 90% or more, preferably 92% or more, and more preferably 95% or more. If the degree of carbon black dispersion is less than 90%, the dispersibility of carbon black tends to be low, thereby leading to poor fuel economy and durability. Moreover, the electrical resistance of the tire tends to increase greatly over time. Here, the degree of carbon black dispersion can be determined by the method described in EXAMPLES.

The dispersibility of carbon black with a high specific surface area is very poor. Therefore, generally, when the carbon black with a high specific surface area is added, the degree of carbon black dispersion becomes less than 90%. Accordingly, the fuel economy and durability tends to deteriorate, and the electrical resistance of the tire tends to increase greatly over time.

In the case that carbon black with a high specific surface area is added, examples of the method for setting the degree of carbon black dispersion to be equal to or greater than a specific value include the same methods as in the first aspect of the present invention described above.

Specifically, it is preferable that the rubber composition be obtained by a preparation method including: a base

kneading step 1 of kneading at least one rubber including a diene rubber having the lowest SP value (solubility parameter) among the two or more diene rubbers with the carbon black with a high specific surface area; and a base kneading step 2 of kneading a kneaded mixture obtained by the base kneading step 1 with at least one rubber including a diene rubber having the highest SP value among the two or more diene rubbers. For example, when NR as well as BR and/or SBR are added as the diene rubbers, at least one rubber including NR may be kneaded with the carbon black with a high specific surface area in the base kneading step 1, and then a kneaded mixture obtained by the base kneading step 1 may be kneaded with at least one rubber including BR and/or SBR in the base kneading step 2.

After completion of the base kneading step 2, a final kneading step of adding and kneading a vulcanizing agent and a vulcanization accelerator into a kneaded mixture obtained by the base kneading step 2 is performed. In this manner, a rubber composition having a degree of carbon black dispersion that is equal to or greater than a specific value is obtained.

Here, it is more preferable that the rubber composition be obtained by the preparation method further including a rekneading step of rekneading a kneaded mixture obtained by the base kneading step 2, before the final kneading step. By performing the rekneading step, it is possible to further enhance the dispersibility of carbon black and further improve fuel economy and durability, and to favorably suppress an increase over time in electrical resistance of the tire.

In the rubber composition, the dispersion ratio (measured by an SPM method) of carbon black in the phase of a diene rubber having the highest SP value is preferably 1 or more. Also, the dispersion ratio is preferably 5 or less, more preferably 3 or less, even more preferably 2 or less, and particularly preferably 1.5 or less. When the dispersion ratio is in that range, this indicates that carbon black is dispersed well in the rubber composition containing two or more diene rubbers. Here, the dispersion ratio can be measured by the method described in EXAMPLES.

In the rubber composition, the dispersion ratio (% by volume, measured by an NMR method) of carbon black in the phase of a diene rubber having the highest SP value is preferably 40 or more, and more preferably 42 or more. Also, the dispersion ratio is preferably 80 or less, more preferably 65 or less, and even more preferably 57 or less. When the dispersion ratio is in that range, this indicates that carbon black is dispersed well in the rubber composition containing two or more diene rubbers. Here, the dispersion ratio can be measured by the method described in EXAMPLES.

(Pneumatic tire)

The pneumatic tire of the second aspect of the present invention can be prepared by a usual method using the above rubber composition. That is, an unvulcanized rubber composition in which the above components are mixed is extruded and processed into the shape of a tire component such as a clinch rubber and/or a chafer rubber, and then molded together with other tire components by a usual method in a tire building machine, whereby an unvulcanized tire is formed. The unvulcanized tire is heated and pressurized in a vulcanizer, thereby obtaining a tire.

The pneumatic tire of the second aspect of the present invention can be used as a tire for passenger cars, a tire for trucks and buses, a tire for two-wheel vehicles, a high performance tire, or the like.

Hereinafter, an example of the pneumatic tire of the second aspect of the present invention will be described with a drawing.

<Basic structure>

The structure of the pneumatic tire of the second aspect of the present invention is illustrated, for example, in Fig. 1 showing the upper right half of a cross-sectional view of a tire, and the pneumatic tire has the same structure as the pneumatic tire of the first aspect of the present invention described above.

When the above structure is employed, the static electricity generated in the bead portion rubber located in the contact area with the rim or generated in the ground contact area during the running of the tire is discharged outside the tire through the conductive rubber components that are electrically connected to one another in the tire. Accordingly, even if silica is used in the tread rubber, the breaker rubber, or the sidewall rubber, the electrical resistance of the tire can be lowered.

<Tread rubber, breaker rubber, and sidewall rubber>

Preferred embodiments of the tread rubber, the breaker rubber, and the sidewall rubber, which form the tire, are the same as in the first aspect of the present invention described above.

<Coating rubber>

Preferred embodiments of the coating rubber are the same as in the first aspect of the present invention described above.

<Breaker cushion rubber>

Preferred embodiments of the breaker cushion rubber are the same as in the first aspect of the present invention. In the second aspect of the present invention, it should be noted that as the rubber compound for the breaker cushion rubber, substantially the same one as the inner sidewall rubber layer described later may be employed, and carbon black and silica may be added.

<Conducting rubber>

Preferred embodiments of the conducting rubber are the same as in the first aspect of the present invention described above.

<Inner sidewall rubber layer>

Preferred embodiments of the inner sidewall rubber layer are the same as in the first aspect of the present invention described above.

In the present invention, static electricity can be efficiently discharged through the electrical connection path as shown in Fig. 1, and at the same time the crack resistance can be improved by using the rubber composition for an inner sidewall rubber layer formulated as above. Accordingly, the formation of cracks starting from a ply wound-up portion can be prevented, and the formation of cracks on the sidewall surface and the inner liner surface can also be prevented.

<Bead portion rubber>

In the present invention, the bead portion rubber placed in an area of the bead portion which comes into contact with a rim flange, conceptually includes clinch rubbers and chafer rubbers (chafers and rubber chafers). When a tire runs, the driving force is transmitted from the rim via the bead portion rubber, and at this time, static electricity is likely to be generated due to the friction between the rim and the bead portion rubber. Since the bead portion rubber has a contact area with the inner sidewall rubber layer, static electricity can be efficiently discharged to the ground contact surface through the inner sidewall rubber layer. The clinch rubber or the chafer rubber (chafer or rubber chafer) is electrically connected to the inner sidewall rubber layer 14 in Fig. 1.

Here, the bead portion rubber has a volume specific resistance of less than $1\times10^8$ Ω·cm. When the volume specific resistance is set to be less than $1\times10^8$ Ω·cm, good conductivity of the tire is obtained. The volume specific resistance of the bead portion rubber is preferably $1\times10^7$ Ω·cm or less, more preferably $1\times10^{6.5}$ Ω·cm or less, even more preferably $1\times10^6$ Ω·cm or less, and particularly preferably $1\times10^{5.5}$ Ω·cm or less. Also, the volume specific resistance is preferably $1\times10^3$ Ω·cm or more, and more preferably $1\times10^4$ Ω·cm or more. The bead portion rubber, that is, the clinch rubber or the chafer rubber (chafer or rubber chafer) is preferably prepared from the rubber composition for a clinch and/or a chafer of the present invention described above.

<Carcass>

Preferred embodiments of the carcass are the same as in the first aspect of the present invention described above.

In the present invention, the volume specific resistance of the tread rubber, the breaker rubber, and the sidewall rubber is set to $1\times10^8$ Ω·cm or more to maintain the tire performance such as rolling resistance and durability while the volume specific resistance of the inner sidewall rubber layer, the breaker cushion rubber, the coating rubber, the conducting rubber, and the bead portion rubber which are electrically connected to one another is adjusted to a lower value. Accordingly, the static electricity generated in the pneumatic tire can be efficiently discharged via the electrical connection path thus formed.

Moreover, since the bead portion rubber (more preferably the clinch rubber and/or the chafer rubber) is prepared from the rubber composition of the second aspect of the present invention, it is possible not only to keep rolling resistance low, and prevent the accumulation of static electricity during the running of the tire, but also to suppress an increase over time in electrical resistance of the tire, efficiently prevent the accumulation of static electricity during the running of the tire throughout the life of the tire, and improve durability. Moreover, when the inner sidewall rubber layer and/or the breaker cushion rubber are/is also prepared from the rubber composition of the second aspect of the present invention, the effects of the present invention are more favorably obtained.

<Rubber compounds for coating rubber, conducting rubber, inner sidewall rubber layer, breaker cushion rubber, tread rubber, breaker rubber, and sidewall rubber>

The coating rubber, the conducting rubber, the inner sidewall rubber layer, the breaker cushion rubber, the tread rubber, the breaker rubber, and the sidewall rubber in the pneumatic tire of the second aspect of the present invention are formed from, for example, the following rubber compositions.

Examples of materials usable as the rubber component of each rubber composition include those mentioned for the rubber composition of the second aspect of the present invention. As the rubber component used for the coating rubber, the conducting rubber, the inner sidewall rubber layer, and the breaker cushion rubber, diene rubbers are preferred, and among these, natural rubber, styrene butadiene rubber, butadiene rubber, isoprene rubber, epoxidized natural rubber, and the like are preferred.

In the rubber compositions, compounding agents generally used in rubber compounds for tires as mentioned below may be appropriately added.

In the present invention, silica is preferably added in the tread rubber, the breaker rubber, or the sidewall rubber as described above. When silica is added in the rubber composition, a silane coupling agent is preferably added in an amount of, for example, 1 to 20 parts by mass per 100 parts by mass of the silica. When the silane coupling agent is added in an amount of 1 part by mass or more, the abrasion resistance of the tire is enhanced and the rolling resistance is reduced. Also, when the silane coupling agent is added in an amount of 20 parts by mass or less, there is then less risk of scorching during the kneading and extrusion of the rubber composition, and the cost is less likely to increase unnecessarily. Examples of the silane coupling agent include the same ones as mentioned above.

In the rubber compositions, compounding agents that are generally used for the preparation of rubber compositions may be added appropriately in addition to the above components, and examples thereof include reinforcing fillers such as clay, zinc oxide, stearic acid, processing aids, various antioxidants, softeners, plasticizers, tackifiers, vulcanizing agents such as sulfur, and vulcanization accelerators.

EXAMPLES

The present invention will be described in detail, referring to examples, but the present invention is not limited thereto.

Hereinafter, various chemicals used in examples and comparative examples will be summarized.

<Materials>

NR (natural rubber): RSS#3 (SP value: 7.9)
BR (butadiene rubber) : BR150B (cis content: 95% by mass, SP value: 8.4) manufactured by UBE INDUSTRIES, LTD.
ENR25 (epoxidized natural rubber): ENR 25 (epoxidized natural rubber having an epoxidation degree of 25 mol%, SP value: 9) manufactured by Kumpulan Guthrie Berhad (Malaysia)
SBR: HPR340 (modified S-SBR, bound styrene content: 10% by mass, Tg: -60°C; coupled by and terminated with an alkoxysilane, and modified by a compound represented by formula (1); SP value: 8.1) manufactured by JSR Corporation
Silica: Ultrasil VN3 ($N_2SA$: 175 $m^2/g$) manufactured by Degussa
Silane coupling agent: Si69 (bis(3-triethoxysilylpropyl)tetrasulfide) manufactured by Degussa
Carbon black 1: Shoblack N330 ($N_2SA$: 75 $m^2/g$, DBP: 102 ml/100 g) manufactured by Cabot Japan
Carbon black 2: Ketjen Black EC600JD ($N_2SA$: 1270 $m^2/g$, DPB: 495 ml/100 g) manufactured by Ketjen Black International Com
Carbon black 3: PRINTEX XE2B ($N_2SA$: 1000 $m^2/g$, DBP: 420 ml/100 g) manufactured by Degussa
Carbon black 4: Ketjen Black EC300J ($N_2SA$: 800 $m^2/g$, DBP: 360 ml/100 g) manufactured by Ketjen Black International Com
Aromatic oil: Process X-140 manufactured by Japan Energy Corporation
Petroleum resin: SP1068 resin manufactured by NIPPON SHOKUBAI CO., LTD.
Stearic acid: stearic acid "Kiri" manufactured by NOF CORPORATION
Zinc oxide: zinc oxide #2 manufactured by MITSUI MINING & SMELTING CO., LTD.
Antioxidant: Nocrac 6C (N-(1,3-dimethylbutyl)-N'-phenyl-p-phenylenediamine) manufactured by OUCHI SHINKO CHEMICAL INDUSTRIAL CO.,LTD.
Wax: Ozoace 0355 manufactured by NIHON SEIRO CO., LTD.
Sulfur: sulfur powder manufactured by Tsurumi Chemical
Vulcanization accelerator NS: Nocceler NS (N-tert-butyl-2-benzothiazolylsulfenamide) manufactured by OUCHI SHINKO CHEMICAL INDUSTRIAL CO.,LTD.
SBR1502: SBR1502 manufactured by Sumitomo Chemical Co., Ltd.

SBR1500: SBR1500 manufactured by Sumitomo Chemical Co., Ltd.
Carbon black N220: Diablack I ($N_2SA$: 114 $m^2/g$) manufactured by Mitsubishi Chemical Corporation
Cobalt stearate: COST-S manufactured by Nippon Mining & Metals Co., Ltd.
Insoluble sulfur: Sanfel EX manufactured by SANSHIN CHEMICAL INDUSTRY CO., LTD.

(Examples corresponding to the first aspect of the present invention)

<Preparation of inner sidewall rubber layer and breaker cushion rubber>

(Examples and Comparative Example 8)

Among the compounding components shown in Table 1, the components shown in the step 1 were kneaded for 4 minutes by using a Banbury internal mixer so that the discharge temperature was 150°C (base kneading step 1). Thereafter, a kneaded mixture obtained by the base kneading step 1 and the components shown in the step 2 were kneaded for 3 minutes by using a Banbury internal mixer so that the discharge temperature was 150°C (base kneading step 2). In addition, in Examples 3 to 6 and Comparative Example 8, a kneaded mixture obtained by the base kneading step 2 was kneaded for 3 minutes by using a Banbury internal mixer so that the discharge temperature was 140°C (rekneading step). Subsequently, the sulfur and vulcanization accelerator were added to a kneaded mixture obtained by the base kneading step 2 or a kneaded mixture obtained by the rekneading step, and the resultant mixture was further kneaded for 3 minutes so that the discharge temperature was 100°C, and then subjected to an extrusion step and a calendering step by conventional methods to prepare an inner sidewall rubber layer composition and a breaker cushion rubber composition.

(Comparative Examples 1 to 7)

Among the compounding components shown in Table 1, the components excluding the sulfur and vulcanization accelerator were kneaded for 4 minutes by using a Banbury internal mixer so that the discharge temperature was 150°C. Thereafter, the sulfur and vulcanization accelerator were added thereto, and the resultant mixture was further kneaded for 3 minutes so that the discharge temperature was 100°C, and then subjected to an extrusion step and a calendaring step by conventional methods to prepare an inner sidewall rubber layer composition and a breaker cushion rubber composition.

<Preparation of coating rubber and conducting rubber>

Among the compounding components shown in Table 2 or 3, the components excluding the sulfur and vulcanization accelerator were kneaded for 4 minutes by using a Banbury internal mixer so that the discharge temperature was 150°C. Thereafter, the sulfur and vulcanization accelerator were added thereto, and the resultant mixture was further kneaded for 3 minutes so that the discharge temperature was 100°C, and then subjected to an extrusion step and a calendaring step by conventional methods to prepare a coating rubber composition (undertread rubber composition) and a conducting rubber composition.

<Preparation of tread rubber, sidewall rubber, and breaker rubber>

Among the components shown in Table 4 to 6, the components excluding the sulfur and vulcanization accelerator were kneaded for 4 minutes by using a Banbury internal mixer so that the discharge temperature was 150°C. Thereafter, the sulfur and vulcanization accelerator were added thereto, and the resultant mixture was further kneaded for 3 minutes so that the discharge temperature was 100°C, and then subjected to an extrusion step and a calendaring step by conventional methods to prepare a tread rubber composition, a sidewall rubber composition, and a breaker rubber composition.

<Preparation of clinch rubber and chafer rubber>

Among the compounding components shown in Table 7, the components shown in the step 1 were kneaded for 4 minutes by using a Banbury internal mixer so that the discharge temperature was 150°C (base kneading step 1) . Thereafter, a kneaded mixture obtained by the base kneading step 1 and the components shown in the step 2 were kneaded for 3 minutes by using a Banbury internal mixer so that the discharge temperature was 150°C (base kneading step 2). In addition, a kneaded mixture obtained by the base kneading step 2 was kneaded for 3 minutes by using a Banbury internal mixer so that the discharge temperature was 140°C (rekneading step). Subsequently, the sulfur and

vulcanization accelerator were added to a kneaded mixture obtained by the rekneading step and the resultant mixture was further kneaded for 3 minutes so that the discharge temperature was 100°C, and then subjected to an extrusion step and a calendaring step by conventional methods to prepare a clinch rubber composition and a chafer rubber composition.

<Preparation of vulcanized rubber slab for test>

The rubber compositions shown in Tables 1 to 7 were vulcanized for 20 minutes at 160°C to prepare vulcanized rubber slab sheets (2 mm×130 mm×130 mm) . The following evaluation was performed on the vulcanized rubber slab sheets. The results are shown in Tables 1 to 7.

<Volume specific resistance of rubber composition>

15 cm×15 cm test pieces having a thickness of 2 mm were prepared from the vulcanized rubber slab sheets (the rubber compositions in Tables 1 to 7), and the volume specific resistance of the rubber compositions was measured under the conditions: voltage 10 V, temperature 23°C, and humidity 55%, by using R8340A as an instrument for measuring electrical resistance (manufactured by ADVANTEST CORPORATION). The common logarithms of the results are shown in Tables 1 to 7. The greater the value, the higher the volume specific resistance of the rubber composition, and in turn the poorer the conductivity.

<Degree of carbon black dispersion>

Test pieces for measurement were cut out from the vulcanized rubber slab sheets (the rubber compositions in Tables 1 and 7), and agglomerates of carbon black in each vulcanized rubber composition were counted based on JIS K 6812 "Method for the assessment of the degree of pigment or carbon black dispersion in polyolefin pipes, fittings and compounds" to calculate the degree (%) of carbon black dispersion. The greater the degree of dispersion, the better the dispersibility of carbon black.

<Dispersion ratio (measured by SPM method) of carbon black in polymer phase having high SP value>

Test pieces for measurement were cut out from the vulcanized rubber slab sheets (the rubber compositions in Table 1). By using an SPM (scanning probe microscope), the volume fraction of carbon black dispersed in each polymer phase was determined by image analysis. Based on the following formula, the dispersion ratio of carbon black in a polymer phase having the highest SP value (solubility parameter) was calculated. The smaller the value of the ratio is, the more uniformly the carbon black is dispersed throughout.

(Dispersion ratio of carbon black in polymer phase having the highest SP value) = (Volume fraction of carbon black dispersed in polymer phase having the highest SP value) / (Average of volume fractions of carbon black dispersed in all phases except polymer phase having the highest SP value)

<Dispersion ratio (measured by NMR method) of carbon black in polymer phase having high SP value>

In addition to the above method, the following method using NMR was employed to measure the volume fraction of carbon black dispersed in each polymer phase.

Specifically, as described below, the content of carbon black dispersed in each rubber phase was quantitated for each rubber phase, based on the linewidths of spectra measured by a $^{13}C$ DD/MAS NMR method.

To each polymer (NR, BR, or ENR25) alone used in examples and comparative examples, the carbon black used in the present invention was added in different amounts to prepare samples. Specifically, NR was used in an amount of 100% by mass of the rubber component, and the carbon black used in the present invention was added thereto in different amounts to prepare a plurality of samples. Likewise, a plurality of samples were prepared in which BR or ENR25 was used in an amount of 100% by mass.

Then, by using the samples, the correlation between the peak linewidth of each polymer alone measured by $^{13}C$-NMR and the amount of carbon black was analyzed.

For example, in the $^{13}C$ DD/MAS NMR spectra of the vulcanized NR rubbers with different carbon black contents (0 to 70 phr), the assignments of the following five peaks observed are as follows.
NR (C1) $-CH_2-C(CH_3)=CH-CH_2-$: 33 ppm
NR (C2) $-CH_2-C(CH_3)=CH-CH_2-$: 135 ppm
NR (C3) $-CH_2-C(CH_3)=CH-CH_2-$: 126 ppm
NR (C4) $-CH_2-C(CH_3)=CH-CH_2-$: 27 ppm
NR (C5) $-CH_2-C(CH_3)=CH-CH_2-$: 24 ppm
From the investigation by the present inventors, it was found that as the amount of carbon black increases, the peak linewidth increases with some correlation with the amount, and based on the findings, a correlation curve between the peak linewidth and the amount of carbon black was prepared (all of the five peaks showed the same correlation).
The measurement conditions of solid-state $^{13}C$-NMR are as follows.
Instrument: Bruker Avance 400
13C resonance frequency: 100.6 MHz
MAS rotation speed: 5 kHz (±1 Hz)
Measurement mode: DD/MAS
Measurement temperature: 25°C
Sample amount: 1/4 volume of zirconia rotor
By using the same technique, a correlation curve between the peak linewidth and the amount of carbon black was prepared for BR and ENR25. Then, the vulcanized rubber slab sheets of examples and comparative examples were measured by solid-state $^{13}C$-NMR, and the fraction of carbon black distributed in each polymer phase was calculated using the correlation curve.
According to this method, quantitation can be more accurately performed.

<Rolling resistance test>

Test pieces for measurement were cut out from the vulcanized rubber slab sheets (the rubber compositions in Table 1). By using a viscoelasticity spectrometer VES (manufactured by IWAMOTO SEISAKUSHO Co., LTD.), the tanδ of the rubber compositions for test was measured under the conditions: temperature 50°C, initial strain 10%, dynamic strain 2%, and frequency 10 Hz. A rolling resistance index of Comparative Example 3 was regarded as 100, and the properties in terms of rolling resistance were indicated as indices by the following formula. The smaller the index value, the lower the rolling resistance, and in turn the better the properties in terms of rolling resistance.

$$(\text{Rolling resistance index}) = (\text{value of } \tan\delta \text{ of each composition}) / (\text{value of } \tan\delta \text{ of Comparative Example 3}) \times 100$$

<Preparation of pneumatic tire>

The rubber composition prepared according to each formulation shown in Table 1 was applied to the inner sidewall rubber layer and the breaker cushion rubber, and rubber compositions prepared according to the rubber compounds in Tables 2 to 7 were applied to the tread rubber, the sidewall rubber, the breaker rubber, the clinch rubber, the chafer rubber, the coating rubber, and the conducting rubber. They were vulcanized and molded by a usual method to prepare a pneumatic tire (tire for test) having the structure shown in Fig. 1 and a size of 195/65R15.
Here, the basic structure of the tires for test is as follows.

<Carcass ply>

Code angle: 90° in tire circumferential direction
Code material: polyester 1670 dtex/2

<Breaker>

Code angle: 24°×24° in tire circumferential direction
Code material: steel code (2+2×0.25)
It should be noted that the tires had a structure in which the thickness of the inner sidewall rubber layer was 0.5 mm, the thickness of the coating rubber was 1 mm, the thickness of the breaker cushion rubber was 1 mm, and the conducting rubber having a width of 3 mm was formed continuously in the circumferential direction of the tire.
Moreover, the tires also had a structure in which the coating rubber was in contact with the breaker cushion

rubber within a strip portion of 5 mm width along the circumferential direction of the tire, the coating rubber was in contact with the conducting rubber through the entire surface of the conducting rubber in the width direction of the tire, the inner sidewall rubber layer was in contact with the breaker cushion rubber within a strip portion of 5 mm width along the circumferential direction of the tire, and the inner sidewall rubber layer was in contact with the clinch rubber by a width of 5 mm or more along the shape of the carcass.

The following evaluation was performed on the tires for test. The results are shown in Table 1.

<Test for high-speed durability of tire>

A test for high-speed durability was performed on the tires for test prepared as above, and the durability was judged by the running speed (km/h) at which the tire was damaged. The high-speed durability test was performed on the tire by increasing the running speed in order of (1) 200 km/h for 10 minutes, (2) 210 km/h for 10 minutes, and (3) 220 km/h for 10 minutes, and the running speed (km/h) at which the tire was damaged was determined. That is, a tire that can run up to a higher speed (km/h) range has better high-speed durability.

<Electrical resistance of tire>

As shown in Fig. 2, by using a measurement instrument including a metal plate 52 (having a value of electrical resistance of 10 Ω or less) that was placed on an insulating plate 51 (having a value of electrical resistance of $10^{12}$ Ω or more) and had a polished surface; a conductive tire mounting shaft 53 that held a tire-rim assembly; and an electrical resistance measurement device 54, the value of electrical resistance of the tire-rim assembly was measured based on the JATMA standards. Here, the tires for test were used after a mold release agent and dirt on the surface were sufficiently removed in advance, and the tires were sufficiently dried.

Other conditions are as follows.

Rim: made of aluminum alloy, 15×6 JJ

Internal pressure: 200 kPa

Load: 5.3 kN

Temperature of test environment (temperature of test room): 25°C

Humidity: 50%

Measurement range of electrical resistance measurement device: $10^3$ to $1.6\times10^{16}$ Ω

Test voltage (applied voltage): 1000 V

The test was performed in the following manner.

(1) The tire for test is mounted on the rim to prepare a tire-rim assembly. At this time, in a contact area between the tire and the rim, soapy water is used as a lubricant.

(2) The tire-rim assembly is left as is for 2 hours in the test room and then mounted on the tire mounting shaft 53.

(3) The load is applied to the tire-rim assembly for 0.5 minutes. After release of the load, the load is applied again for 0.5 minutes, and then after release, it is applied again for 2 minutes.

(4) At a point in time when 5 minutes has elapsed since the application of the test voltage, the value of electrical resistance between the tire mounting shaft 53 and the metal plate 52 is measured by the electrical resistance measurement device 54. The measurement is performed on 4 sites at an interval of 90° in the circumferential direction of the tire, and a maximum value among the measured values is taken as a value of electrical resistance (measurement value) of the tire in question.

Such measurement was performed before running (new tire) and after 20000 km of running, and the common logarithms of the obtained values of electrical resistance were summarized in Table 1. The common logarithm value is preferably 8 or less. In addition, the values of electrical resistance of the tire before running and after 20000 km of running were compared with each other, and the increase in the value of electrical resistance caused due to the 20000 km of running was also provided in the table. The smaller the increase is, the more the accumulation of static electricity during the running of the tire can be prevented throughout the life of the tire.

<Crack resistance>

The tire for test prepared as above was mounted and allowed to run 30000 km at a speed of 80 km/h under a load of 4. 7 kN to measure the amount of crack growth in the inner sidewall rubber layer and evaluate the crack resistance. Here, when the amount of growth was less than 1 mm, this was marked with Good, when it was at least 1 mm but not more than 5 mm, this was marked with Moderate, and when it exceeded 5 mm, this was marked with Poor.

[Table 1]

Inner sidewall rubber layer, breaker cushion rubber

| | | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|---|---|---|---|
| Amount (part(s) by mass) | Step 1 | NR | 60 | 60 | 60 | 60 | 60 | 60 | 60 | 100 | 100 | 100 | 100 | 60 | 60 | 60 | — |
| | | BR | — | — | — | — | — | — | — | — | — | — | — | 40 | 40 | — | — |
| | | ENR25 | — | — | — | — | — | — | — | — | — | — | — | — | — | 40 | 40 |
| | | Silica | 25 | 25 | 25 | 25 | 25 | 25 | 17.5 | 50 | 35 | 25 | — | — | 20 | 35 | 35 |
| | | Silane coupling agent | 2.0 | 2.0 | 2.0 | 2.0 | 2.0 | 2.0 | 1.4 | 4.0 | 2.8 | 2.0 | — | — | 1.6 | 2.8 | 2.8 |
| | | Carbon black1 | — | — | — | — | — | — | — | — | — | — | 50 | 50 | 30 | — | — |
| | | Carbon black2 | — | — | — | — | 11.5 | 11.5 | — | — | — | — | — | — | — | — | — |
| | | Carbon black3 | 12.5 | 12.5 | 12.5 | 12.5 | — | — | — | — | 6.0 | 12.5 | — | — | — | 6.0 | 6.0 |
| | | Carbon black4 | — | — | — | — | — | — | 20 | — | — | — | — | — | — | — | — |
| | | Aromatic oil | 5 | 5 | 5 | 5 | 5 | 5 | 5 | 5 | 5 | 5 | 5 | 5 | 5 | 5 | 5 |
| | | Petroleum resin | 3 | 3 | 3 | 3 | 3 | 3 | 3 | 3 | 3 | 3 | 3 | 3 | 3 | 3 | 3 |
| | | Stearic acid | — | — | — | — | — | — | — | 2.5 | 2.5 | 2.5 | 2.5 | 2.5 | 2.5 | 2.5 | — |
| | | Zinc oxide | — | — | — | — | — | — | — | 3 | 3 | 3 | 3 | 3 | 3 | 3 | — |
| | | Antioxidant | — | — | — | — | — | — | — | 2 | 2 | 2 | 2 | 2 | 2 | 2 | — |
| | | Wax | — | — | — | — | — | — | — | 1.2 | 1.2 | 1.2 | 1.2 | 1.2 | 1.2 | 1.2 | — |
| | Step 2 | NR | — | — | — | — | — | — | — | — | — | — | — | — | — | — | 60 |
| | | BR | 40 | — | 40 | — | 40 | — | 40 | — | — | — | — | — | — | — | — |
| | | ENR25 | — | 40 | — | 40 | — | 40 | — | — | — | — | — | — | — | — | — |
| | | Stearic acid | 2.5 | 2.5 | 2.5 | 2.5 | 2.5 | 2.5 | 2.5 | — | — | — | — | — | — | — | 2.5 |
| | | Zinc oxide | 3 | 3 | 3 | 3 | 3 | 3 | 3 | — | — | — | — | — | — | — | 3 |
| | | Antioxidant | 2 | 2 | 2 | 2 | 2 | 2 | 2 | — | — | — | — | — | — | — | 2 |
| | | Wax | 1.2 | 1.2 | 1.2 | 1.2 | 1.2 | 1.2 | 1.2 | — | — | — | — | — | — | — | 1.2 |
| | Step 3 | Rekneading | None | None | Performed | Performed | Performed | Performed | None | None | None | None | None | None | None | None | Performed |
| | Step 4 | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | Vulcanization accelerator NS | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 |
| Evaluation results | Degree of carbon black dispersion (%) | | 96 | 94 | 99 | 97 | 98 | 96 | 97 | - | 88 | 82 | 98 | 96 | 97 | 50 | 45 |
| | Volume specific resistance | | 5.1 | 4.9 | 5.2 | 5.1 | 5.2 | 5.1 | 5.0 | 13.9 | 8.0 | 5.2 | 7.0 | 6.5 | 13.8 | 7.8 | 8.0 |
| | Properties in terms of rolling resistance | | 90 | 103 | 88 | 101 | 87 | 100 | 93 | 85 | 87 | 100 | 120 | 115 | 111 | 89 | 93 |
| | High-speed durability | | 240 | 230 | 250 | 240 | 250 | 240 | 240 | 210 | 200 | 200 | 220 | 240 | 240 | 220 | 210 |
| | Electrical resistance of tire (initial state) | | 6.0 | 6.2 | 6.1 | 6.3 | 6.1 | 6.3 | 6.2 | 11.2 | 7.5 | 6.3 | 7.5 | 7.4 | 11.1 | 7.3 | 7.5 |
| | Electrical resistance of tire (after 20000 km of running) | | 6.2 | 6.4 | 6.1 | 6.3 | 6.2 | 6.4 | 6.4 | 11.3 | 9.0 | 7.4 | 7.9 | 7.8 | 11.2 | 8.9 | 9.3 |
| | Increase in electrical resistance caused due to running (20000 km) | | 0.2 | 0.2 | 0.0 | 0.0 | 0.1 | 0.1 | 0.2 | 0.1 | 1.5 | 1.1 | 0.4 | 0.4 | 0.1 | 1.6 | 1.8 |
| | Crack resistance of tire | | Good | Good | Good | Good | Good | Good | Good | Poor | Poor | Poor | Poor | Good | Good | Moderate | Poor |
| | Dispersion ratio (measured by SPM method) of carbon black in polymer phase having high SP value | | 1.3 | 1.5 | 1.1 | 1.2 | 1.1 | 1.2 | 1.2 | — | — | — | — | 3 | 2 | 5 | 10 |
| | Dispersion ratio (% by volume, measured by NMR method) of carbon black in polymer phase having high SP value | | 46 | 50 | 42 | 44 | 42 | 44 | 44 | — | — | — | — | 69 | 58 | 80 | 91 |

[Table 2]

| Coating rubber (undertread) | | |
|---|---|---|
| | | Amount |
| Composition (part(s) by mass) | NR | 75 |
| | SBR1502 | 25 |
| | Carbon black N220 | 20 |
| | Carbon black 1 | 25 |
| | Antioxidant | 2 |
| | Stearic acid | 1 |
| | Zinc oxide | 3 |
| | Sulfur | 3 |
| | Vulcanization accelerator NS | 1 |
| Volume specific resistance | | 5.2 |

[Table 3]

| Conducting rubber | | |
|---|---|---|
| | | Amount |
| Composition (part(s) by mass) | NR | 30 |
| | SBR1500 | 70 |
| | Carbon black N220 | 55 |
| | Wax | 1.5 |
| | Antioxidant | 2 |
| | Stearic acid | 1 |
| | Zinc oxide | 3 |
| | Sulfur | 1.8 |
| | Vulcanization accelerator NS | 1 |
| Volume specific resistance | | 5.4 |

[Table 4]

| Tread rubber | | |
|---|---|---|
| | | Amount |
| Composition (part(s) by mass) | SBR1500 | 100 |
| | Silica | 50 |
| | Silane coupling agent | 5 |
| | Wax | 1 |
| | Antioxidant | 2 |
| | Stearic acid | 1 |
| | Zinc oxide | 3 |
| | Sulfur | 1.5 |

(continued)

| Tread rubber | | |
|---|---|---|
| | | Amount |
| | Vulcanization accelerator NS | 1 |
| Volume specific resistance | | 13.5 |

[Table 5]

| Sidewall rubber | | |
|---|---|---|
| | | Amount |
| Composition (part(s) by mass) | NR | 60 |
| | BR | 40 |
| | Silica | 45 |
| | Silane coupling agent | 4.5 |
| | Wax | 1 |
| | Antioxidant | 3 |
| | Stearic acid | 1 |
| | Zinc oxide | 3 |
| | Sulfur | 2 |
| | Vulcanization accelerator NS | 1 |
| Volume specific resistance | | 13.8 |

[Table 6]

| Breaker rubber | | |
|---|---|---|
| | | Amount |
| Composition (part(s) by mass) | NR | 100 |
| | Silica | 55 |
| | Silane coupling agent | 5.5 |
| | Antioxidant | 2 |
| | Cobalt stearate | 2 |
| | Stearic acid | 1 |
| | Zinc oxide | 10 |
| | Insoluble sulfur | 5.5 |
| | Vulcanization accelerator NS | 0.9 |
| Volume specific resistance | | 14.0 |

[Table 7]

Clinch rubber, chafer rubber

| | | | Amount |
|---|---|---|---|
| Formulation (part(s) by mass) | Step 1 | NR | 60 |
| | | Silica | 50 |
| | | Silane coupling agent | 4.8 |
| | | Carbon black 3 | 15 |
| | | Aromatic oil | 5 |
| | | Resin | 3 |
| | Step 2 | BR | 40 |
| | | Silica | 10 |
| | | Stearic acid | 2.5 |
| | | Zinc oxide | 3 |
| | | Antioxidant | 3 |
| | | Wax | 1.2 |
| | Step 3 | Rekneading | Performed |
| | Step 4 | Sulfur | 1.5 |
| | | Vulcanization accelerator NS | 0.7 |
| Degree of carbon black dispersion (%) | | | 99 |
| Volume specific resistance | | | 5.5 |

Table 1 shows that in all examples in which carbon black having a nitrogen adsorption specific surface area of 400 $m^2/g$ or more was added, the carbon black was dispersed well, the volume specific resistance of the rubber composition was also low, and the accumulation of static electricity during the running of the tire could be prevented. Moreover, the rolling resistance was kept low, the high-speed durability was good, and the value of electrical resistance of the tire was also good since the value was small not only in the initial state but also after 20000 km of running. In addition, the crack resistance of the tire was also good.

Furthermore, when comparing Examples 3 and 4 in which rekneading was performed with the corresponding Examples 1 and 2 in which rekneading was not performed, the dispersibility of carbon black was higher in Examples 3 and 4. Accordingly, the properties in terms of rolling resistance and high-speed durability were further enhanced, and the difference in the value of electrical resistance of the tire between the initial state and after 20000 km of running was reduced. Moreover, in Examples 5 and 6, the values of volume specific resistance and of electrical resistance which were equivalent to those of other examples were obtained with a smaller amount of carbon black, and the properties in terms of rolling resistance were further improved, although slightly.

In Examples 1, 3, and 5, owing to the addition of BR, the dispersibility of carbon black was higher and the properties in terms of rolling resistance were better, compared with the corresponding Examples 2, 4, and 6. In addition, the high-speed durability was also good.

In contrast, in Comparative Example 1 in which no carbon black was added, the volume specific resistance of the composition for an inner sidewall rubber layer or a breaker cushion rubber and the value of electrical resistance of the tire were very high, and the problem of the accumulation of static electricity could not be solved. Moreover, the high-speed durability and crack resistance were also poor.

In Comparative Example 6, carbon black having a nitrogen adsorption specific surface area of less than 400 $m^2/g$ was added. Therefore, even if the carbon black was added in an amount of 30 parts by mass which is the upper limit in the present invention, the volume specific resistance of the composition for an inner sidewall rubber layer or a breaker cushion rubber and the value of electrical resistance of the tire were very high, and the problem of the accumulation of static electricity could also not be solved. By using two or more diene rubbers (NR and BR in this case), the crack resistance and high-speed durability became good, but the properties in terms of rolling resistance greatly deteriorated.

In Comparative Examples 2 to 4, only one kind of diene rubber (NR in this case) was used as the rubber component. Therefore, the crack resistance was poor, and the high-speed durability was also very poor or slightly poor. In addition, the increase in the value of electrical resistance of the tire caused by running was great or slightly great.

Moreover, in Comparative Examples 2 and 3, carbon black having a nitrogen adsorption specific surface area

of 400 $m^2/g$ or more was used, but the kneading method was not particularly considered. Consequently, the dispersibility of the carbon black was poor and therefore the crack resistance and high-speed durability were poor, and the value of electrical resistance of the tire increased particularly greatly. Especially in Comparative Example 2, though the value of electrical resistance in the initial state was good, the value of electrical resistance after 20000 km of running was poor. Moreover, in Comparative Example 4 in which carbon black having a nitrogen adsorption specific surface area of less than 400 $m^2/g$ was added, the properties in terms of rolling resistance were poor, and the value of electrical resistance after 20000 km of running was not so good.

In Comparative Examples 4 and 5, carbon black having a nitrogen adsorption specific surface area of less than 400 $m^2/g$ was added. Thus, in order to obtain a sufficient volume specific resistance or a sufficient value of electrical resistance of the tire, the carbon black needed to be added in an amount of 50 parts by mass which is more than the upper limit of the defined range, and therefore the properties in terms of rolling resistance deteriorated. Moreover, though a large amount of carbon black was added, the volume specific resistance of the composition for an inner sidewall rubber layer or a breaker cushion rubber and the value of electrical resistance of the tire were slightly high. Moreover, the increase in the value of electrical resistance of the tire caused by running was great.

In Comparative Example 7, carbon black having a nitrogen adsorption specific surface area of 400$m^2/g$ or more was used, but the kneading method was not particularly considered. Consequently, the dispersibility of the carbon black was poor and therefore the high-speed durability and crack resistance were slightly poor. Moreover, the increase in electrical resistance caused by running was very large, and though the value of electrical resistance in the initial state was good, the value of electrical resistance after 20000 km of running was poor.

In Comparative Example 8, carbon black having a nitrogen adsorption specific surface area of 400$m^2/g$ or more was used, but the carbon black was kneaded first with a polymer having a high SP value (solubility parameter), contrary to examples. Consequently, the carbon black was unevenly distributed to the polymer having a high SP value, and the dispersibility of carbon black was very poor. Although rekneading was performed, the dispersibility of carbon black was still very poor and not improved, and the properties in terms of high-speed durability, crack resistance, and rolling resistance were poor. In addition, the increase in electrical resistance caused by running became greater.

(Examples corresponding to the second aspect of the present invention)

<Preparation of clinch rubber and chafer rubber>

(Examples and Comparative Examples)

Among the compounding components shown in Table 8, the components shown in the step 1 were kneaded for 4 minutes by using a Banbury internal mixer so that the discharge temperature was 150°C (base kneading step 1) . Thereafter, a kneaded mixture obtained by the base kneading step 1 and the components shown in the step 2 were kneaded for 3 minutes by using a Banbury internal mixer so that the discharge temperature was 150°C (base kneading step 2). In addition, in Examples 10 to 13 and Comparative Example 16, a kneaded mixture obtained by the base kneading step 2 was kneaded for 3 minutes by using a Banbury internal mixer so that the discharge temperature was 140°C (rekneading step).

Subsequently, the sulfur and vulcanization accelerator were added to a kneaded mixture obtained by the base kneading step 2 or a kneaded mixture obtained by the rekneading step, and the resultant mixture was further kneaded for 3 minutes so that the discharge temperature was 100°C, and then subjected to an extrusion step and a calendering step by conventional methods to prepare a clinch rubber composition and a chafer rubber composition.

<Preparation of coating rubber and conducting rubber>

Among the compounding components shown in Table 9 or 10, the components excluding the sulfur and vulcanization accelerator were kneaded for 4 minutes by using a Banbury internal mixer so that the discharge temperature was 150°C. Thereafter, the sulfur and vulcanization accelerator were added thereto, and the resultant mixture was further kneaded for 3 minutes so that the discharge temperature was 100°C, and then subjected to an extrusion step and a calendaring step by conventional methods to prepare a coating rubber composition (undertread rubber composition) and a conducting rubber composition.

<Preparation of tread rubber, sidewall rubber, and breaker rubber>

Among the compounding components shown in Table 11 to 13, the components excluding the sulfur and vulcanization accelerator were kneaded for 4 minutes by using a Banbury internal mixer so that the discharge temperature was 150°C. Thereafter, the sulfur and vulcanization accelerator were added thereto, and the resultant mixture was further

kneaded for 3 minutes so that the discharge temperature was 100°C, and then subjected to an extrusion step and a calendaring step by conventional methods to prepare a tread rubber composition, a sidewall rubber composition, and a breaker rubber composition.

<Preparation of inner sidewall rubber layer and breaker cushion rubber>

Among the compounding components shown in Table 14, the components shown in the step 1 were kneaded for 4 minutes by using a Banbury internal mixer so that the discharge temperature was 150°C (base kneading step 1) . Thereafter, a kneaded mixture obtained by the base kneading step 1 and the components shown in the step 2 were kneaded for 3 minutes by using a Banbury internal mixer so that the discharge temperature was 150°C (base kneading step 2). In addition, a kneaded mixture obtained by the base kneading step 2 was kneaded for 3 minutes by using a Banbury internal mixer so that the discharge temperature was 140°C (rekneading step). Subsequently, the sulfur and vulcanization accelerator were added to a kneaded mixture obtained by the rekneading step, and the resultant mixture was further kneaded for 3 minutes so that the discharge temperature was 100°C, and then subjected to an extrusion step and a calendering step by conventional methods to prepare an inner sidewall rubber layer composition and a breaker cushion rubber composition.

<Preparation of vulcanized rubber slab for test>

The rubber compositions in Tables 8 to 14 were vulcanized for 20 minutes at 160°C to prepare vulcanized rubber slab sheets (2 mm×130 mm×130 mm) . The following evaluation was performed on the vulcanized rubber slab sheets. The results are shown in Tables 8 to 14.

<Volume specific resistance of rubber composition>

15 cm×15 cm test pieces having a thickness of 2 mm were prepared from the vulcanized rubber slab sheets (the rubber compositions in Tables 8 to 14), and the volume specific resistance of the rubber compositions was measured under the conditions: voltage 10 V, temperature 23°C, and humidity 55%, by using R8340A as an instrument for measuring electrical resistance (manufactured by ADVANTEST CORPORATION). The common logarithms of the results are shown in Tables 8 to 14. The greater the value, the higher the volume specific resistance of the rubber composition, and in turn the poorer the conductivity.

<Degree of carbon black dispersion>

Test pieces for measurement were cut out from the vulcanized rubber slab sheets (the rubber compositions in Tables 8 and 14), and agglomerates of carbon black in each vulcanized rubber composition were counted based on JIS K 6812 "Method for the assessment of the degree of pigment or carbon black dispersion in polyolefin pipes, fittings and compounds" to calculate the degree (%) of carbon black dispersion. The greater the degree of dispersion, the better the dispersibility of carbon black.

<Dispersion ratio (measured by SPM method) of carbon black in polymer phase having high SP value>

Test pieces for measurement were cut out from the vulcanized rubber slab sheets (the rubber compositions in Table 8). By using an SPM (scanning probe microscope), the volume fraction of carbon black dispersed in each polymer phase was determined by image analysis. Based on the following formula, the dispersion ratio of carbon black in a polymer phase having the highest SP value (solubility parameter) was calculated. The smaller the value of the ratio is, the more uniformly the carbon black is dispersed throughout.

(Dispersion ratio of carbon black in polymer phase having the highest SP value) = (Volume fraction of carbon black dispersed in polymer phase having the highest SP value) / (Average of volume fractions of carbon black dispersed in all phases except polymer phase having the highest SP value)

<Dispersion ratio (measured by NMR method) of carbon black in polymer phase having high SP value>

In addition to the above method, the following method using NMR was employed to measure the volume fraction of carbon black dispersed in each polymer phase.

Specifically, as described below, the content of carbon black dispersed in each rubber phase was quantitated for each rubber phase, based on the linewidths of spectra measured by a $^{13}C$ DD/MAS NMR method.

To each polymer (NR or BR) alone used in examples and comparative examples, the carbon black used in the present invention was added in different amounts to prepare samples. Specifically, NR was used in an amount of 100% by mass of the rubber component, and the carbon black used in the present invention was added thereto in different amounts to prepare a plurality of samples. Likewise, a plurality of samples were prepared in which BR was used in an amount of 100% by mass.

Then, by using the samples, the correlation between the peak linewidth of each polymer alone measured by $^{13}C$-NMR and the amount of carbon black was analyzed.

For example, in the $^{13}C$ DD/MAS NMR spectra of the vulcanized NR rubbers with different carbon black contents (0 to 70 phr), the assignments of the following five peaks observed are as follows.

NR (C1) $-CH_2-C(CH_3)=CH-CH_2-$: 33 ppm
NR (C2) $-CH_2-C(CH_3)=CH-CH_2-$: 135 ppm
NR (C3) $-CH_2-C(CH_3)=CH-CH_2-$: 126 ppm
NR (C4) $-CH_2-C(CH_3)=CH-CH_2-$: 27 ppm
NR (C5) $-CH_2-C(CH_3)=CH-CH_2-$: 24 ppm

From the investigation by the present inventors, it was found that as the amount of carbon black increases, the peak linewidth increases with some correlation with the amount, and based on the findings, a correlation curve between the peak linewidth and the amount of carbon black was prepared (all of the five peaks showed the same correlation).

The measurement conditions of solid-state $^{13}C$-NMR are as follows.

Instrument: Bruker Avance 400
13C resonance frequency: 100.6 MHz
MAS rotation speed: 5 kHz (±1 Hz)
Measurement mode: DD/MAS
Measurement temperature: 25°C
Sample amount: 1/4 volume of zirconia rotor

By using the same technique, a correlation curve between the peak linewidth and the amount of carbon black was prepared for BR. Then, the vulcanized rubber slab sheets of examples and comparative examples were measured by solid-state $^{13}C$-NMR, and the fraction of carbon black distributed in each polymer phase was calculated using the correlation curve.

According to this method, quantitation can be more accurately performed.

<Rolling resistance test>

Test pieces for measurement were cut out from the vulcanized rubber slab sheets (the rubber compositions in Table 8). By using a viscoelasticity spectrometer VES (manufactured by IWAMOTO SEISAKUSHO Co., LTD.), the tanδ of the rubber compositions for test was measured under the conditions: temperature 50°C, initial strain 10%, dynamic strain 2%, and frequency 10 Hz. A rolling resistance index of Comparative Example 11 was regarded as 100, and the properties in terms of rolling resistance were indicated as indices by the following formula. The smaller the index value, the lower the rolling resistance, and in turn the better the properties in terms of rolling resistance.

$$(\text{Rolling resistance index}) = (\text{value of } \tan\delta \text{ of each composition}) / (\text{value of } \tan\delta \text{ of Comparative Example 11}) \times 100$$

<Preparation of pneumatic tire>

The rubber composition prepared according to each formulation shown in Table 8 was applied to the clinch rubber and the chafer rubber, and the rubber compositions prepared according to the rubber compounds in Tables 9 to 14 were applied to the tread rubber, the sidewall rubber, the breaker rubber, the inner sidewall rubber layer, the breaker cushion rubber, the coating rubber, and the conducting rubber. They were vulcanized and molded by a usual method to prepare a pneumatic tire (tire for test) having the structure shown in Fig. 1 and a size of 195/65R15.

Here, the basic structure of the tires for test is as follows.

<Carcass ply>

Code angle: 90° in tire circumferential direction
Code material: polyester 1670 dtex/2

<Breaker>

Code angle: 24°×24° in tire circumferential direction
Code material: steel code (2+2×0.25)

It should be noted that the tires had a structure in which the thickness of the inner sidewall rubber layer was 0.5 mm, the thickness of the coating rubber was 1 mm, the thickness of the breaker cushion rubber was 1 mm, and the conducting rubber having a width of 3 mm was formed continuously in the circumferential direction of the tire.

Moreover, the tires also had a structure in which the coating rubber was in contact with the breaker cushion rubber within a strip portion of 5 mm width along the circumferential direction of the tire, the coating rubber was in contact with the conducting rubber through the entire surface of the conducting rubber in the width direction of the tire, the inner sidewall rubber layer was in contact with the breaker cushion rubber within a strip portion of 5 mm width along the circumferential direction of the tire, and the inner sidewall rubber layer was in contact with the clinch rubber by a width of 5 mm or more along the shape of the carcass.

The following evaluation was performed on the tires for test. The results are shown in Table 8.

<Electrical resistance of tire>

The electrical resistance of the tires was measured by the aforementioned method. The measurement was performed before running (new tire) and after 20000 km of running, and the common logarithms of the obtained values of electrical resistance were summarized in Table 8. The common logarithm value is preferably 8 or less. In addition, the values of electrical resistance of the tire before running and after 20000 km of running were compared with each other, and the increase in the value of electrical resistance caused by 20000 km of running was also provided in the table. The smaller the increase is, the more the accumulation of static electricity during the running of the tire can be prevented throughout the life of the tire.

<Rim chafing resistance>

The tire for test prepared as above was mounted and allowed to run 20000 km at a speed of 80 km/h. Then, the exterior of the clinch was observed and the occurrence of chafing was visually evaluated. "Good" indicates good resistance, "Moderate" indicates that chafing occurred partially, and "Poor" indicates that chafing occurred a lot.

[Table 8]

Clinch rubber, chafer rubber

| | | | Example 8 | Example 9 | Example 10 | Example 11 | Example 12 | Example 13 | Example 14 | Comparative Example 9 | Comparative Example 10 | Comparative Example 11 | Comparative Example 12 | Comparative Example 13 | Comparative Example 14 | Comparative Example 15 | Comparative Example 16 |
|---|---|---|---|---|---|---|---|---|---|---|---|---|---|---|---|---|---|
| Amount (part(s) by mass) | Step 1 | NR | 60 | 60 | 60 | 60 | 60 | 60 | 60 | 100 | 100 | 100 | 100 | 60 | 60 | 60 | — |
| | | BR | — | — | — | — | — | — | — | — | — | — | — | 40 | 40 | — | — |
| | | SBR | — | — | — | — | — | — | — | — | — | — | — | — | — | 40 | 40 |
| | | Silica | 50 | 50 | 50 | 50 | 50 | 50 | 36.5 | 70 | 58 | 50 | — | — | 35 | 58 | 58 |
| | | Silane coupling agent | 4.8 | 4.8 | 4.8 | 4.8 | 4.8 | 4.8 | 3.7 | 6.4 | 5.4 | 4.8 | 0.8 | 0.8 | 3.6 | 5.4 | 5.4 |
| | | Carbon black 1 | — | — | — | — | — | — | — | — | — | — | 65 | 65 | 30 | — | — |
| | | Carbon black 2 | — | — | — | — | 14 | 14 | — | — | — | — | — | — | — | — | — |
| | | Carbon black 3 | 15 | 15 | 15 | 15 | — | — | — | — | 7 | 15 | — | — | — | 7 | 7 |
| | | Carbon black 4 | — | — | — | — | — | — | 23.5 | — | — | — | — | — | — | — | — |
| | | Aromatic oil | 5 | 5 | 5 | 5 | 5 | 5 | 5 | 5 | 5 | 5 | 5 | 5 | 5 | 5 | 5 |
| | | Petroleum resin | 3 | 3 | 3 | 3 | 3 | 3 | 3 | 3 | 3 | 3 | 3 | 3 | 3 | 3 | 3 |
| | | Stearic acid | — | — | — | — | — | — | — | — | — | — | — | — | — | — | — |
| | | Zinc oxide | — | — | — | — | — | — | — | — | — | — | — | — | — | — | — |
| | | Antioxidant | — | — | — | — | — | — | — | — | — | — | — | — | — | — | — |
| | | Wax | — | — | — | — | — | — | — | — | — | — | — | — | — | — | — |
| | Step 2 | NR | — | — | — | — | — | — | — | — | — | — | — | — | — | — | 60 |
| | | BR | 40 | — | 40 | — | 40 | — | 40 | — | — | — | — | — | — | — | — |
| | | SBR | — | 40 | — | 40 | — | 40 | — | — | — | — | — | — | — | — | — |
| | | Silica | 10 | 10 | 10 | 10 | 10 | 10 | 10 | 10 | 10 | 10 | 10 | 10 | 10 | 10 | 10 |
| | | Stearic acid | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | Zinc oxide | 3 | 3 | 3 | 3 | 3 | 3 | 3 | 3 | 3 | 3 | 3 | 3 | 3 | 3 | 3 |
| | | Antioxidant | 3 | 3 | 3 | 3 | 3 | 3 | 3 | 3 | 3 | 3 | 3 | 3 | 3 | 3 | 3 |
| | | Wax | 1.2 | 1.2 | 1.2 | 1.2 | 1.2 | 1.2 | 1.2 | 1 | 1 | 1 | 1 | 1 | 1 | 1 | 1.2 |
| | Step 3 | Rekneading | None | None | Performed | Performed | Performed | Performed | None | None | None | None | None | None | None | None | Performed |
| | Step 4 | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | Vulcanization accelerator NS | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 |
| Evaluation results | Degree of carbon black dispersion (%) | | 96 | 95 | 99 | 97 | 98 | 96 | 97 | - | 87 | 80 | 98 | 97 | 97 | 70 | 60 |
| | Volume specific resistance | | 5.4 | 5.4 | 5.5 | 5.6 | 5.4 | 5.5 | 5.7 | 13.9 | 8.1 | 5.2 | 6.9 | 6.6 | 13.8 | 7.9 | 8.1 |
| | Properties in terms of rolling resistance | | 90 | 102 | 88 | 100 | 87 | 99 | 93 | 82 | 87 | 100 | 130 | 123 | 115 | 89 | 92 |
| | Electrical resistance of tire (initial state) | | 6.0 | 6.2 | 6.2 | 6.4 | 6.1 | 6.3 | 6.4 | 11.3 | 7.6 | 6.4 | 7.4 | 7.5 | 11.2 | 7.4 | 7.6 |
| | Electrical resistance of tire (after 20000 km of running) | | 6.2 | 6.4 | 6.2 | 6.4 | 6.2 | 6.4 | 6.6 | 11.4 | 9.0 | 7.4 | 7.8 | 7.9 | 11.3 | 9.0 | 9.4 |
| | Increase in electrical resistance caused due to running (20000 km) | | 0.2 | 0.2 | 0.0 | 0.0 | 0.1 | 0.1 | 0.2 | 0.1 | 1.4 | 1.0 | 0.4 | 0.4 | 0.1 | 1.6 | 1.8 |
| | Rim chafing resistance | | Good | Good | Good | Good | Good | Good | Good | Poor | Poor | Poor | Poor | Good | Good | Moderate | Poor |
| | Dispersion ratio (measured by SPM method) of carbon black in polymer phase having high SP value | | 1.3 | 1.4 | 1.1 | 1.2 | 1.1 | 1.2 | 1.2 | - | - | - | - | 2.5 | 2 | 4.5 | 7 |
| | Dispersion ratio (% by volume, measured by NMR method) of carbon black in polymer phase having high SP value | | 46 | - | 42 | - | 42 | - | 44 | - | - | - | - | 65 | 58 | - | - |

[Table 9]

| Coating rubber (undertread) | | |
|---|---|---|
| | | Amount |
| Composition (part(s) by mass) | NR | 75 |
| | SBR1502 | 25 |
| | Carbon black N220 | 20 |
| | Carbon black 1 | 25 |
| | Antioxidant | 2 |
| | Stearic acid | 1 |
| | Zinc oxide | 3 |
| | Sulfur | 3 |
| | Vulcanization accelerator NS | 1 |
| Volume specific resistance | | 5.2 |

[Table 10]

| Conducting rubber | | |
|---|---|---|
| | | Amount |
| Composition (part(s) by mass) | NR | 30 |
| | SBR1500 | 70 |
| | Carbon black N220 | 55 |
| | Wax | 1.5 |
| | Antioxidant | 2 |
| | Stearic acid | 1 |
| | Zinc oxide | 3 |
| | Sulfur | 1.8 |
| | Vulcanization accelerator NS | 1 |
| Volume specific resistance | | 5.4 |

[Table 11]

| Tread rubber | | |
|---|---|---|
| | | Amount |
| Composition (part(s) by mass) | SBR1500 | 100 |
| | Silica | 50 |
| | Silane coupling agent | 5 |
| | Wax | 1 |
| | Antioxidant | 2 |
| | Stearic acid | 1 |
| | Zinc oxide | 3 |
| | Sulfur | 1.5 |

(continued)

| Tread rubber | | |
| --- | --- | --- |
| | | Amount |
| | Vulcanization accelerator NS | 1 |
| Volume specific resistance | | 13.5 |

[Table 12]

| Sidewall rubber | | |
| --- | --- | --- |
| | | Amount |
| Composition (part(s) by mass) | NR | 60 |
| | BR | 40 |
| | Silica | 45 |
| | Silane coupling agent | 4.5 |
| | Wax | 1 |
| | Antioxidant | 3 |
| | Stearic acid | 1 |
| | Zinc oxide | 3 |
| | Sulfur | 2 |
| | Vulcanization accelerator NS | 1 |
| Volume specific resistance | | 13.8 |

[Table 13]

| Breaker rubber | | |
| --- | --- | --- |
| | | Amount |
| Composition (part(s) by mass) | NR | 100 |
| | Silica | 55 |
| | Silane coupling agent | 5.5 |
| | Antioxidant | 2 |
| | Cobalt stearate | 2 |
| | Stearic acid | 1 |
| | Zinc oxide | 10 |
| | Insoluble sulfur | 5.5 |
| | Vulcanization accelerator NS | 0.9 |
| Volume specific resistance | | 14.0 |

[Table 14]

Inner sidewall rubber layer, breaker cushion rubber

| | | | Amount |
|---|---|---|---|
| Formulation (part(s) by mass) | Step 1 | NR | 60 |
| | | Silica | 25 |
| | | Silane coupling agent | 2.0 |
| | | Carbon black 3 | 12.5 |
| | | Aromatic oil | 5 |
| | | Petroleum resin | 3 |
| | Step 2 | BR | 40 |
| | | Stearic acid | 2.5 |
| | | Zinc oxide | 3 |
| | | Antioxidant | 2 |
| | | Wax | 1.2 |
| | Step 3 | Rekneading | Performed |
| | Step 4 | Sulfur | 1.5 |
| | | Vulcanization accelerator NS | 0.7 |
| Degree of carbon black dispersion (%) | | | 99 |
| Volume specific resistance | | | 5.2 |

Table 8 shows that in all examples in which carbon black having a nitrogen adsorption specific surface area of 400 $m^2/g$ or more was added, the carbon black was dispersed well, the volume specific resistance of the rubber composition was also low, and the accumulation of static electricity during the running of the tire could be prevented. Moreover, the rolling resistance was kept low, the rim chafing resistance was good, and the value of electrical resistance of the tire was also good since the value was small not only in the initial state but also after 20000 km of running.

In addition, when comparing Examples 10 and 11 in which rekneading was performed with the corresponding Examples 8 and 9 in which rekneading was not performed, the dispersibility of carbon black was higher in Examples 10 and 11. Accordingly, the properties in terms of rolling resistance and rim chafing resistance were further enhanced, and the difference in the value of electrical resistance of the tire between the initial state and after 20000 km of running was reduced. Moreover, in Examples 12 and 13, the values of volume specific resistance and of electrical resistance which were equivalent to those of other examples were obtained with a smaller amount of carbon black, and the properties in terms of rolling resistance were further improved, although slightly.

Moreover, in Examples 8, 10, and 12, owing to the addition of BR, the dispersibility of carbon black was higher and the properties in terms of rolling resistance were better, compared with the corresponding Examples 9, 11, and 13. In addition, the rim chafing resistance was also good.

In contrast, in Comparative Example 9 in which no carbon black was added, the volume specific resistance of the composition for a clinch rubber or a chafer rubber and the value of electrical resistance of the tire were very high, and the problem of the accumulation of static electricity could not be solved. Moreover, the rim chafing resistance was also poor.

In Comparative Example 14, carbon black having a nitrogen adsorption specific surface area of less than 400 $m^2/g$ was added. Therefore, even if the carbon black was added in an amount of 30 parts by mass which is the upper limit in the present invention, the volume specific resistance of the composition for a clinch rubber or a chafer rubber and the value of electrical resistance of the tire were very high, and the problem of the accumulation of static electricity could also not be solved. By using two or more diene rubbers (NR and BR in this case), the rim chafing resistance became good, but the properties in terms of rolling resistance greatly deteriorated.

In Comparative Examples 10 to 12, only one kind of diene rubber (NR in this case) was used as the rubber component. Therefore, the rim chafing resistance was poor. In addition, the increase in the value of electrical resistance of the tire caused by running was great or slightly great.

Moreover, in Comparative Examples 10 and 11, carbon black having a nitrogen adsorption specific surface area of 400 $m^2/g$ or more was used, but the kneading method was not particularly considered. Consequently, the dispersibility of the carbon black was poor and therefore the rim chafing resistance was poor, and the value of electrical

resistance of the tire increased particularly greatly. Especially in Comparative Example 10, though the value of electrical resistance in the initial state was good, the value of electrical resistance after 20000 km of running was poor. Also, in Comparative Example 12 in which carbon black having a nitrogen adsorption specific surface area of less than 400 $m^2/g$ was added, the properties in terms of rolling resistance were poor, and the value of electrical resistance after 20000 km of running was not so good.

In Comparative Examples 12 and 13, carbon black having a nitrogen adsorption specific surface area of less than 400 $m^2/g$ was added. Thus, in order to obtain a sufficient volume specific resistance or a sufficient value of electrical resistance of the tire, the carbon black needed to be added in an amount of 65 parts by mass which is more than the upper limit of the defined range, and therefore the properties in terms of rolling resistance deteriorated. Moreover, though a large amount of carbon black was added, the volume specific resistance of the composition for a clinch rubber or a chafer rubber and the value of electrical resistance of the tire were slightly high. Moreover, the increase in electrical resistance of the tire caused by running was great.

In Comparative Example 15, carbon black having a nitrogen adsorption specific surface area of 400$m^2/g$ or more was used, but the kneading method was not particularly considered. Consequently, the dispersibility of the carbon black was poor and therefore the rim chaffing resistance was slightly poor. Moreover, the increase in electrical resistance caused by running was very large, and though the value of electrical resistance in the initial state was good, the value of electrical resistance after 20000 km of running was poor.

In Comparative Example 16, carbon black having a nitrogen adsorption specific surface area of 400$m^2/g$ or more was used, but the carbon black was kneaded first with a polymer having a high SP value (solubility parameter), contrary to examples. Consequently, the carbon black was unevenly distributed to the polymer having a high SP value, and the dispersibility of carbon black was very poor. Although rekneading was performed, the dispersibility of carbon black was still very poor and not improved, and the rim chafing resistance was poor. In addition, the increase in electrical resistance caused by running became greater.

REFERENCE SIGNS LIST

| | |
|---|---|
| 1 | tire |
| 2 | chafer rubber |
| 3 | clinch rubber |
| 4 | breaker cushion rubber |
| 5 | coating rubber |
| 6 | conducting rubber |
| 7 | tread rubber |
| 8 | sidewall rubber |
| 9 | breaker rubber |
| 10 | carcass |
| 11 | bead apex |
| 12 | band |
| 13 | bead core |
| 14 | inner sidewall rubber layer |
| 51 | insulating plate |

52 metal plate

53 tire mounting shaft

54 electrical resistance measurement device

## Claims

**1.** A rubber composition for at least one of an inner sidewall layer and a breaker cushion, comprising:

a rubber component comprising two or more diene rubbers; and
carbon black having a nitrogen adsorption specific surface area of 400 $m^2/g$ or more, as determined according to JIS K 6217-2:2001, in an amount of 5 to 30 parts by mass per 100 parts by mass of the rubber component,
wherein the rubber composition has a degree of carbon black dispersion determined by counting agglomerates based on JIS K 6812 "Method for the assessment of the degree of pigment or carbon black dispersion in polyolefin pipes, fittings and compounds" of 90% or more.

**2.** The rubber composition for at least one of an inner sidewall layer and a breaker cushion according to Claim 1, which is obtained by a preparation method comprising:

a base kneading step 1 of kneading at least one rubber including a diene rubber having the lowest solubility parameter among the two or more diene rubbers with the carbon black; and
a base kneading step 2 of kneading a kneaded mixture obtained by the base kneading step 1 with at least one rubber including a diene rubber having the highest solubility parameter among the two or more diene rubbers.

**3.** The rubber composition for at least one of an inner sidewall layer and a breaker cushion according to Claim 2, which is obtained by the preparation method further comprising a rekneading step of rekneading a kneaded mixture obtained by the base kneading step 2.

**4.** A pneumatic tire, comprising:

at least one of an inner sidewall rubber layer and a breaker cushion rubber which are formed from the rubber composition according to Claim 1.

**5.** The pneumatic tire according to Claim 4, comprising:

a tread portion;
a sidewall portion;
a bead portion;
a carcass extending from the tread portion via the sidewall portion to the bead portion; and
a breaker portion located outwardly from the carcass in a radial direction of the tire,
wherein the tread portion, the breaker portion, and the sidewall portion comprise a tread rubber, a breaker rubber, and a sidewall rubber, respectively, all of which have a volume specific resistance of $1 \times 10^8$ Ω·cm or more, as determined according to the method disclosed in the examples, wherein the pneumatic tire comprises: an inner sidewall rubber layer that is placed between the carcass and the sidewall rubber;
a breaker cushion rubber that is placed in contact with the inner sidewall rubber layer and placed below both ends of a breaker;
a coating rubber that is placed so as to cover an upper side of the breaker portion while having a contact area with the breaker cushion rubber;
a conducting rubber that is embedded in the tread portion so as to be in contact with the coating rubber and partially exposed on the tread surface; and
a bead portion rubber that is placed in contact with the inner sidewall rubber layer and placed in an area of the bead portion which comes into contact with a rim flange, and
wherein all of the inner sidewall rubber layer, the breaker cushion rubber, the coating rubber, the conducting rubber, and the bead portion rubber have a volume specific resistance of less than $1 \times 10^8$ Ω·cm.

**6.** The pneumatic tire according to Claim 4,

wherein the inner sidewall rubber layer has a thickness of 0.2 to 1.0 mm.

**7.** The pneumatic tire according to Claim 5,
wherein the bead portion rubber is a clinch rubber or a chafer rubber.

**8.** The pneumatic tire according to Claim 5,
wherein the conducting rubber is formed continuously in a circumferential direction of the tire.

**9.** A rubber composition for at least one of a clinch and a chafer, comprising:

a rubber component comprising two or more diene rubbers; and
carbon black having a nitrogen adsorption specific surface area of 400 $m^2/g$ or more, as determined according to JIS K 6217-2:2001, in an amount of 5 to 30 parts by mass per 100 parts by mass of the rubber component,
wherein the rubber composition has a degree of carbon black dispersion determined by counting agglomerates based on JIS K 6812 "Method for the assessment of the degree of pigment or carbon black dispersion in polyolefin pipes, fittings and compounds" of 90% or more.

**10.** The rubber composition for at least one of a clinch and a chafer according to Claim 9, which is obtained by a preparation method comprising:

a base kneading step 1 of kneading at least one rubber including a diene rubber having the lowest solubility parameter among the two or more diene rubbers with the carbon black; and
a base kneading step 2 of kneading a kneaded mixture obtained by the base kneading step 1 with at least one rubber including a diene rubber having the highest solubility parameter among the two or more diene rubbers.

**11.** The rubber composition for at least one of a clinch and a chafer according to Claim 10, which is obtained by the preparation method further comprising a rekneading step of rekneading a kneaded mixture obtained by the base kneading step 2.

**12.** A pneumatic tire, comprising:

at least one of a clinch rubber and a chafer rubber which are formed from the rubber composition according to Claim 9.

**13.** The pneumatic tire according to Claim 12, comprising:

a tread portion;
a sidewall portion;
a bead portion;
a carcass extending from the tread portion via the sidewall portion to the bead portion; and
a breaker portion located outwardly from the carcass in a radial direction of the tire,
wherein the tread portion, the breaker portion, and the sidewall portion comprise a tread rubber, a breaker rubber, and a sidewall rubber, respectively, all of which have a volume specific resistance of $1\times10^8$ Ω·cm or more, as determined according to the method disclosed in the examples,
wherein the pneumatic tire comprises: an inner sidewall rubber layer that is placed between the carcass and the sidewall rubber;
a breaker cushion rubber that is placed in contact with the inner sidewall rubber layer and placed below both ends of a breaker;
a coating rubber that is placed so as to cover an upper side of the breaker portion while having a contact area with the breaker cushion rubber;
a conducting rubber that is embedded in the tread portion so as to be in contact with the coating rubber and partially exposed on the tread surface; and
a bead portion rubber that is placed in contact with the inner sidewall rubber layer and placed in an area of the bead portion which comes into contact with a rim flange,
wherein the bead portion rubber is at least one of the clinch rubber and the chafer rubber, and
wherein all of the inner sidewall rubber layer, the breaker cushion rubber, the coating rubber, the conducting rubber, and the bead portion rubber have a volume specific resistance of less than $1\times10^8$ Ω·cm.

**14.** The pneumatic tire according to Claim 13,
wherein the conducting rubber is formed continuously in a circumferential direction of the tire.

## Patentansprüche

**1.** Kautschukzusammensetzung für zumindest eines von einer Innenseitenwandschicht und einem Breakerkissen, umfassend:

eine Kautschukkomponente, die zwei oder mehr Dienkautschuke umfasst; und
Ruß mit einer spezifischen Stickstoffadsorptionsoberfläche von 400 $m^2$/g oder mehr, wie gemäß JIS K 6217-2:2001 ermittelt, in einer Menge von 5 bis 30 Massenteile bezogen auf 100 Massenteile der Kautschukomponente,
wobei die Kautschukzusammensetzung einen Grad an Rußverteilung, ermittelt durch Zählen von Agglomeraten auf der Basis von JIS K 6812 "Method for the assessment of the degree of pigment or carbon black dispersion in polyolefin pipes, fittings and compounds", von 90% oder mehr aufweist.

**2.** Kautschukzusammensetzung für zumindest eines von einer Innenseitenwandschicht und einem Breakerkissen nach Anspruch 1, erhalten durch ein Herstellungsverfahren, umfassend:

einen Basisknetschritt 1 eines Knetens zumindest eines Kautschukes, der einen Dienkautschuk enthält, der den niedrigsten Löslichkeitsparameter unter den zwei oder mehr Dienkautschuken aufweist, mit dem Ruß; und
einen Basisknetschritt 2 eines Knetens eines gekneteten Gemisches, das durch den Basisknetschritt 1 erhalten wird, mit zumindest einem Kautschuk, der einen Dienkautschuk enthält, der den höchsten Löslichkeitsparameter unter den zwei oder mehr Dienkautschuken aufweist.

**3.** Kautschukzusammensetzung für zumindest eines von einer Innenseitenwandschicht und einem Breakerkissen nach Anspruch 2, erhalten durch das Herstellungsverfahren, das ferner einen Wiederholungsknetschritt eines erneuten Knetens eines durch den Basisknetschritt 2 erhaltenen gekneteten Gemisches umfasst.

**4.** Luftreifen, umfassend: zumindest eines von einer Innenseitenwand-Kautschukschicht und einem Breakerkissenkautschuk, die/der aus der Kautschukzusammensetzung nach Anspruch 1 gebildet ist.

**5.** Luftreifen nach Anspruch 4, umfassen:

einen Laufflächenabschnitt;
einen Seitenwandschnitt;
einen Wulstabschnitt;
eine Karkasse, die sich von dem Laufflächenabschnitt über den Seitenwandabschnitt zu dem Wulstabschnitt erstreckt; und
einen Breakerabschnitt, der außen von der Karkasse in einer radialen Richtung des Reifens gelegen ist,
wobei der Laufflächenabschnitt, der Breakerabschnitt und der Seitenwandabschnitt jeweils einen Laufflächenkautschuk, einen Breakerkautschuk bzw. einen Seitenwandkautschuk aufweisen, die alle einen spezifischen Volumenwiderstand von $1x10^8$ Ω·cm oder mehr aufweisen, wie gemäß dem in den Beispielen offenbarten Verfahren ermittelt, wobei der Luftreifen umfasst: eine Innenseitenwand-Kautschukschicht, die zwischen der Karkasse und dem Seitenwandkautschuk platziert ist;
einen Breakerkissenkautschuk, der in Kontakt mit der Innenseitenwand-Kautschukschicht platziert und unterhalb beider Enden eines Breakers platziert ist;
einen Beschichtungskautschuk, der derart platziert ist, dass er eine obere Seite des Breakerabschnitts bedeckt, während er eine Kontaktfläche mit dem Breakerkissenkautschuk aufweist;
einen leitenden Kautschuk, der in dem Laufflächenabschnitt derart eingebettet ist, dass er mit dem Beschichtungskautschuk in Kontakt steht und an der Laufflächenoberfläche teilweise freigelegt ist; und
einen Wulstabschnittskautschuk, der in Kontakt mit der Innenseitenwand-Kautschukschicht platziert und in einem Bereich des Wulstabschnitts, der mit einem Felgenhorn in Kontakt gelangt, platziert ist, und
wobei alle von dem Innenseitenwand-Kautschukschicht, dem Breakerkissenkautschuk, dem Beschichtungskautschuk, dem leitfähigen Kautschuk und dem Wulstabschnittskautschuk einen spezifischen Volumenwiderstand von weniger als $1x10^8$ Ω·cm aufweisen.

6. Luftreifen nach Anspruch 4, wobei die Innenseitenwand-Kautschukschicht eine Dicke von 0,2 bis 1,0 mm aufweist.

7. Luftreifen nach Anspruch 5, wobei der Wulstabschnittskautschuk ein Abriebstreifenkautschuk oder ein Wulstbandkautschuk ist.

8. Luftreifen nach Anspruch 5, wobei der leitfähige Kautschuk durchgehend in einer Umfangsrichtung des Reifens gebildet ist.

9. Kautschukzusammensetzung für zumindest eines von einem Abriebstreifen und einem Wulstband, umfassend:

eine Kautschukkomponente, die zwei oder mehr Dienkautschuke umfasst; und
Ruß mit einer spezifischen Stickstoffadsorptionsoberfläche von 400 $m^2/g$ oder mehr, wie gemäß JIS K 6217-2:2001 ermittelt, in einer Menge von 5 bis 30 Massenteile bezogen auf 100 Massenteile der Kautschukomponente,
wobei die Kautschukzusammensetzung einen Grad an Rußverteilung, ermittelt durch Zählen von Agglomeraten auf der Basis von JIS K 6812 "Method for the assessment of the degree of pigment or carbon black dispersion in polyolefin pipes, fittings and compounds", von 90% oder mehr aufweist.

10. Kautschukzusammensetzung für zumindest eines von einem Abriebstreifen oder einem Wulstband nach Anspruch 9, erhalten durch ein Herstellungsverfahren, umfassend:

einen Basisknetschritt 1 eines Knetens zumindest eines Kautschukes, der einen Dienkautschuk enthält, der den niedrigsten Löslichkeitsparameter unter den zwei oder mehr Dienkautschuken aufweist, mit dem Ruß; und
einen Basisknetschritt 2 eines Knetens eines durch den Basisknetschritt 1 erhaltenen gekneteten Gemisches mit zumindest einem Kautschuk, der einen Dienkautschuk enthält, der den höchsten Löslichkeitsparameter unter den zwei oder mehr Dienkautschuken aufweist.

11. Kautschukzusammensetzung für zumindest eines von einem Abriebstreifen und einem Wulstband nach Anspruch 10, erhalten durch das Herstellungsverfahren, das ferner einen Wiederholungsknetschritt eines erneuten Knetens eines durch den Basisknetschritt 2 erhaltenen gekneteten Gemisches umfasst.

12. Luftreifen, umfassend: zumindest eines von einem Abriebstreifenkautschuk und einem Wulstbandkautschuk, der aus der Kautschukzusammensetzung nach Anspruch 9 gebildet ist.

13. Luftreifen nach Anspruch 12, umfassend:

einen Laufflächenabschnitt;
einen Seitenwandschnitt;
einen Wulstabschnitt;
eine Karkasse, die sich von dem Laufflächenabschnitt über den Seitenwandabschnitt zu dem Wulstabschnitt erstreckt; und
einen Breakerabschnitt, der außen von der Karkasse in einer radialen Richtung des Reifens gelegen ist,
wobei der Laufflächenabschnitt, der Breakerabschnitt und der Seitenwandabschnitt jeweils einen Laufflächenkautschuk, einen Breakerkautschuk bzw. einen Seitenwandkautschuk aufweisen, die alle einen spezifischen Volumenwiderstand von $1x10^8$ $\Omega{\cdot}cm$ oder mehr aufweisen, wie gemäß dem in den Beispielen offenbarten Verfahren ermittelt,
wobei der Luftreifen umfasst: eine Innenseitenwand-Kautschukschicht, die zwischen der Karkasse und dem Seitenwandkautschuk platziert ist;
einen Breakerkissenkautschuk, der in Kontakt mit der Innenseitenwand-Kautschukschicht platziert und unterhalb beider Enden eines Breakers platziert ist;
einen Beschichtungskautschuk, der derart platziert ist, dass er eine obere Seite des Breakerabschnitts bedeckt, während er eine Kontaktfläche mit dem Breakerkissenkautschuk aufweist;
einen leitenden Kautschuk, der in dem Laufflächenabschnitt derart eingebettet ist, dass er mit dem Beschichtungskautschuk in Kontakt steht und an der Laufflächenoberfläche teilweise freigelegt ist; und
einen Wulstabschnittskautschuk, der in Kontakt mit der Innenseitenwand-Kautschukschicht platziert und in einem Bereich des Wulstabschnitts, der in Kontakt mit einem Felgenhorn gelangt, platziert ist, und
wobei der Wulstabschnittskautschuk zumindest einer von dem Abriebstreifenkautschuk und dem Wulstbandkautschuk ist, und

wobei alle von der Innenseitenwand-Kautschukschicht, dem Breakerkissenkautschuk, dem Beschichtungskautschuk, dem leitfähigen Kautschuk und dem Wulstabschnittskautschuk einen spezifischen Volumenwiderstand von weniger als 1x$10^8$ $\Omega$·cm aufweisen.

**14.** Luftreifen nach Anspruch 13, wobei der leitfähige Kautschuk durchgehend in der Umfangsrichtung des Reifens gebildet ist.

**Revendications**

**1.** Composition de caoutchouc pour au moins l'un d'une couche de flanc interne et d'un coussin de nappe-sommet, comprenant :

un composant de caoutchouc comprenant deux caoutchoucs diéniques ou plus ; et
du noir de carbone ayant une surface spécifique d'adsorption d'azote de 400 $m^2$/g ou plus, tel que déterminé par le document JIS K 6217-2:2001, dans une quantité de 5 à 30 parties en masse pour 100 parties en masse du composant de caoutchouc,
dans laquelle la composition de caoutchouc a un degré de dispersion de noir de carbone déterminé par la comptabilisation d'agglomérats sur la base du document JIS K 6812 « Method for the assessment of the degree of pigment or carbon black dispersion in polyolefin pipes, fittings and compounds » de 90 % ou plus.

**2.** Composition de caoutchouc pour au moins l'un d'une couche de flanc interne et d'un coussin de nappe-sommet selon la revendication 1, qui est obtenue à l'aide d'un procédé de préparation comprenant :

une étape de malaxage de base 1 consistant à malaxer un caoutchouc incluant un caoutchouc diénique ayant le paramètre de solubilité le plus bas d'entre les deux caoutchoucs diéniques ou plus avec le noir de carbone ; et
une étape de malaxage de base 2 consistant à malaxer un mélange malaxé obtenu à l'aide de l'étape de malaxage de base 1 avec au moins un caoutchouc incluant un caoutchouc diénique ayant le paramètre de solubilité le plus élevé d'entre les deux caoutchoucs diéniques ou plus.

**3.** Composition de caoutchouc pour au moins l'un d'une couche de flanc interne et d'un coussin de nappe-sommet selon la revendication 2, qui est obtenue à l'aide du procédé de préparation comprenant en outre une étape de remalaxage consistant à remalaxer un mélange malaxé obtenu à l'aide de l'étape de malaxage de base 2.

**4.** Bandage pneumatique, comprenant :

au moins l'un d'une couche de caoutchouc de flanc interne et d'un caoutchouc de coussin de nappe-sommet qui sont formés à partir de la composition de caoutchouc selon la revendication 1.

**5.** Bandage pneumatique selon la revendication 4, comprenant :

une partie bande de roulement ;
une partie flanc ;
une partie talon ;
une carcasse s'étendant de la partie bande de roulement via la partie flanc jusqu'à la partie talon ; et
une partie nappe-sommet située vers l'extérieur de la carcasse dans une direction radiale du bandage,
dans lequel la partie bande de roulement, la partie nappe-sommet et la partie flanc comprennent un caoutchouc de bande de roulement, un caoutchouc de nappe-sommet et un caoutchouc de flanc, respectivement, tous ayant une résistance transversale spécifique de 1 x $10^8$ $\Omega$.cm ou plus,
tel que déterminé selon le procédé divulgué dans les exemples, dans lequel le bandage pneumatique comprend :
une couche de caoutchouc de flanc interne qui est placée entre la carcasse et le caoutchouc de flanc ;
un caoutchouc de coussin de nappe-sommet qui est placé en contact avec la couche de caoutchouc de flanc interne et placé en dessous des deux extrémités d'une nappe-sommet ;
un caoutchouc de revêtement qui est placé de sorte à couvrir une face supérieure de la partie nappe-sommet tout en ayant une surface de contact avec le caoutchouc du coussin de nappe-sommet ;
un caoutchouc conducteur qui est encastré dans la partie bande de roulement de manière à être en contact avec le caoutchouc de revêtement et partiellement exposé sur la surface de la bande de roulement ; et
un caoutchouc de partie talon qui est placé en contact avec la couche de caoutchouc de flanc interne et placé

dans une zone de la partie talon qui vient en contact avec un rebord de jante, et
dans lequel l'ensemble de la couche de caoutchouc de flanc interne, du caoutchouc de coussin de nappe-sommet, du caoutchouc de revêtement, du caoutchouc conducteur et du caoutchouc de partie talon ont une résistance transversale spécifique inférieure à 1 x $10^8$ Ω.cm.

**6.** Bandage pneumatique selon la revendication 4,
dans lequel la couche de caoutchouc de flanc interne a une épaisseur de 0,2 à 1,0 mm.

**7.** Bandage pneumatique selon la revendication 5,
dans lequel le caoutchouc de partie talon est un caoutchouc de coussin de jante ou un caoutchouc de bandelette talon.

**8.** Bandage pneumatique selon la revendication 5,
dans lequel le caoutchouc conducteur est formé en continu dans une direction circonférentielle du bandage.

**9.** Composition de caoutchouc pour au moins l'un d'un coussin de jante et d'une bandelette talon, comprenant :

un composant de caoutchouc comprenant deux caoutchoucs diéniques ou plus ; et
du noir de carbone ayant une surface spécifique d'adsorption d'azote de 400 $m^2/g$ ou plus, tel que déterminé par le document JIS K 6217-2 :2001, dans une quantité de 5 à 30 parties en masse pour 100 parties en masse du composant de caoutchouc,
dans laquelle la composition de caoutchouc a un degré de dispersion de noir de carbone déterminé par la comptabilisation d'agglomérats sur la base du document JIS K 6812 « Method for the assessment of the degree of pigment or carbon black dispersion in polyolefin pipes, fittings and compounds » de 90 % ou plus.

**10.** Composition de caoutchouc pour au moins l'un d'un coussin de jante et d'une bandelette talon selon la revendication 9, qui est obtenue à l'aide d'un procédé de préparation comprenant :

une étape de malaxage de base 1 consistant à malaxer au moins un caoutchouc incluant un caoutchouc diénique ayant le paramètre de solubilité le plus bas d'entre les deux caoutchoucs diéniques ou plus avec le noir de carbone ; et
une étape de malaxage de base 2 consistant à malaxer un mélange malaxé obtenu à l'aide de l'étape de malaxage de base 1 avec au moins un caoutchouc incluant un caoutchouc diénique ayant le paramètre de solubilité le plus élevé d'entre les deux caoutchoucs diéniques ou plus.

**11.** Composition de caoutchouc pour au moins l'un d'un coussin de jante et d'une bandelette talon selon la revendication 10, qui est obtenue à l'aide du procédé de préparation comprenant en outre une étape de remalaxage consistant à remalaxer un mélange malaxé obtenu à l'aide de l'étape de malaxage de base 2.

**12.** Bandage pneumatique, comprenant :

au moins l'un d'un caoutchouc de coussin de jante et d'un caoutchouc de bandelette talon qui sont formés à partir de la composition de caoutchouc selon la revendication 9.

**13.** Bandage pneumatique selon la revendication 12, comprenant :

une partie bande de roulement ;
une partie flanc ;
une partie talon ;
une carcasse s'étendant de la partie bande de roulement via la partie flanc jusqu'à la partie talon ; et
une partie nappe-sommet située vers l'extérieur de la carcasse dans une direction radiale du bandage,
dans lequel la partie bande de roulement, la partie nappe-sommet et la partie flanc comprennent un caoutchouc de bande de roulement, un caoutchouc de nappe-sommet et un caoutchouc de flanc, respectivement, tous ayant une résistance transversale spécifique de 1 x $10^8$ Ω.cm ou plus,
tel que déterminé selon le procédé divulgué dans les exemples,
dans lequel le bandage pneumatique comprend : une couche de caoutchouc de flanc interne qui est placée entre la carcasse et le caoutchouc de flanc ;
un caoutchouc de coussin de nappe-sommet qui est placé en contact avec la couche de caoutchouc de flanc interne et placé en dessous des deux extrémités d'une nappe-sommet ;

un caoutchouc de revêtement qui est placé de sorte à couvrir une face supérieure de la partie nappe-sommet tout en ayant une surface de contact avec le caoutchouc de coussin de nappe-sommet ;
un caoutchouc conducteur qui est encastré dans la partie bande de roulement de manière à être en contact avec le caoutchouc de revêtement et partiellement exposé sur la surface de la bande de roulement ; et
un caoutchouc de partie talon qui est placé en contact avec la couche de caoutchouc de flanc interne et placé dans une zone de la partie talon qui vient en contact avec un rebord de jante,
dans lequel le caoutchouc de la partie talon est au moins l'un du caoutchouc de coussin de jante et du caoutchouc de bandelette talon, et
dans lequel l'ensemble de la couche de caoutchouc de flanc interne, du caoutchouc de coussin de nappe-sommet, du caoutchouc de revêtement, du caoutchouc conducteur et du caoutchouc de partie talon ont une résistance transversale spécifique inférieure à 1 x $10^8$ Ω.cm.

**14.** Bandage pneumatique selon la revendication 13,
dans lequel le caoutchouc conducteur est formé en continu dans une direction circonférentielle du bandage.

Fig. 1

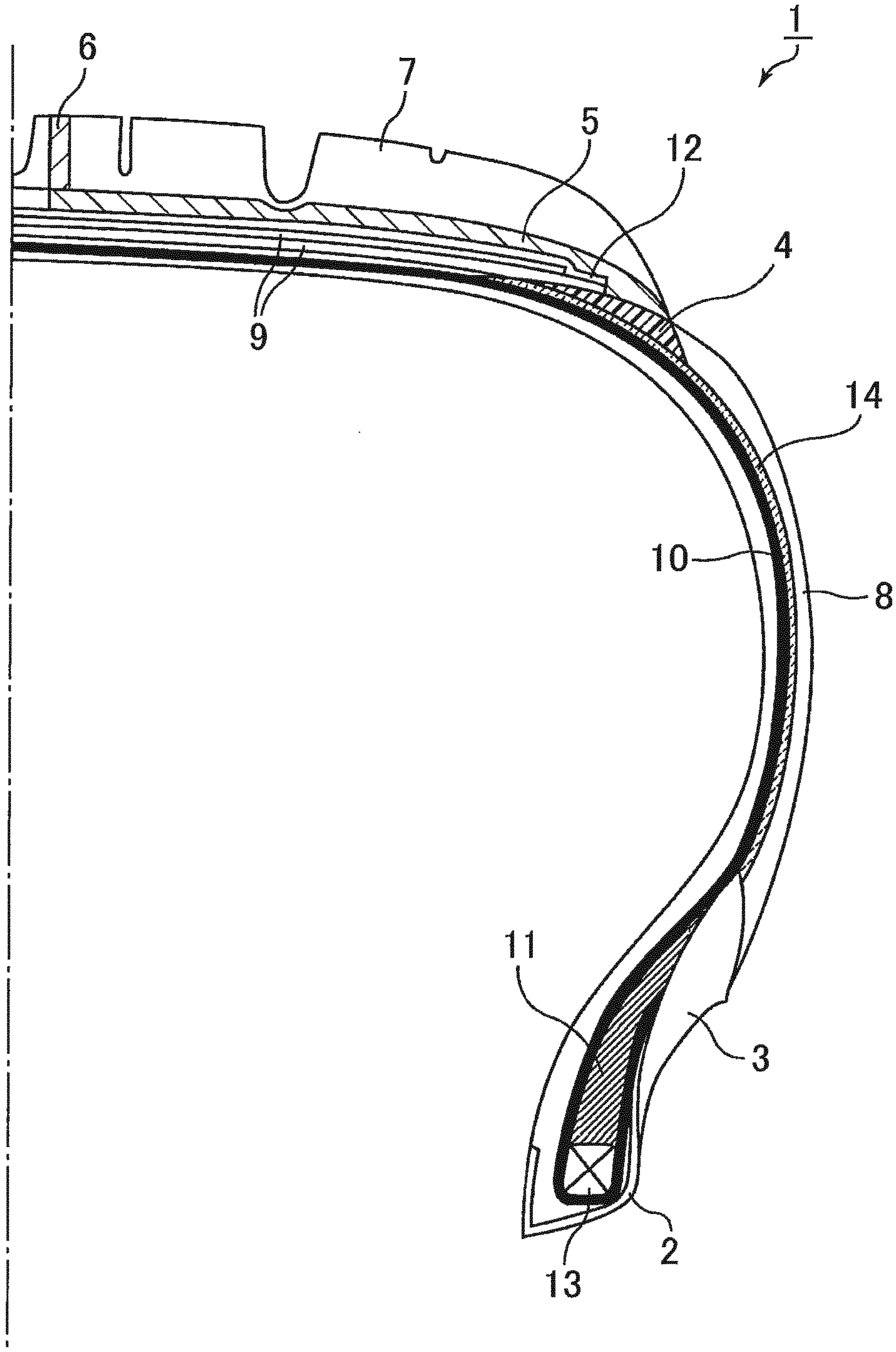

Fig. 2

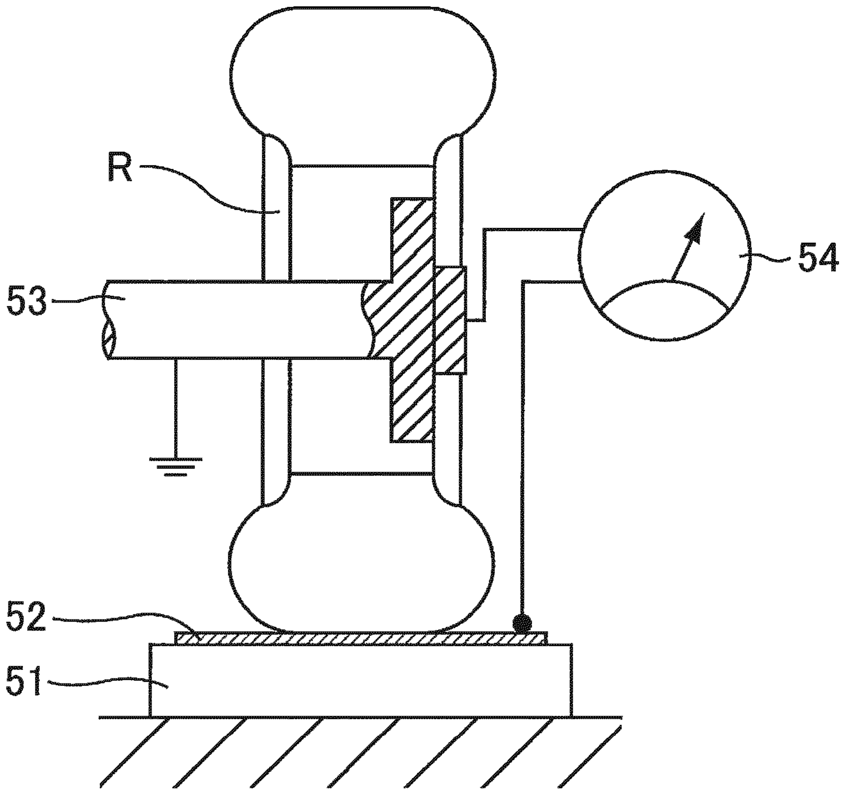

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0870796 A1
- EP 2014488 A1
- EP 1709688 A1
- JP 2007008269 A
- JP 2011088458 A
- JP 2010111753 A
- JP H0653768 B
- JP H0657767 B
- JP 2003514078 T